# EUROPEAN PATENT APPLICATION

(11) **EP 0 941 922 A1**
(43) Date of publication of application: **15.09.1999**
(21) Application number: 97941782.1
(22) Date of filing: 26.09.1997
(51) Int. Cl.: B64C 1/06

(54) **PRESTRESSED STRUCTURE FOR AIRCRAFT AND THE METHOD OF PRODUCING THE SAME**

(30) Priority: 07.10.1996 CN 96118365; 25.11.1996 CN 96118426
(71) Applicant: Wang, Xinyun, City Hunan 410001 (CN)
(72) Inventor: Wang, Xinyun, City Hunan 410001 (CN)
(74) Representative: Loven, Keith James
(86) International application number: CN9700095
(87) International publication number: WO9815455

(57) **Abstract**

The load-bearing elements of the aircraft such as fuselage, longeron, stringer, bulkhead, covering, floor, horizontal stabilizer, vertical stabilizer, are fully partially made of prestressed structure comprising a pre-pressed member and a pre-tensioned member, and adding the filler to form units, the prestressed structure is obtained by producing a prestress greater than the maximum permissible stress and less than the yield strength during the manufacture and assembly, so it can improve the fatigue strength and the fracture resistance, and reduce the weight of the aircraft and the cost of manufacture.

## Description

### Technical Field

This invention relates to the prestressed structure for aircraft such as airplane and the of producing the same, method which is adaptable to all aircrafts heavier than air in space and aviation field.

### Technical Background

At present, the structure design for aircraft such as airplane are adopting non-prestressed components. In order to lower airplane weight and satisfy the requirement for safe operation, a great progress has made in airplane structure design and the high tensile materials are developed with obvious results. Along with airplane development, the structure design and producing material with more high level are required. The large sized airplane using in the future more loaded than 1000 passenger seats even more. The huge structure makes the fuselage borne with huge expansion force only arising from the differential pressure of the passenger cabin, which takes the airplane in the explosive danger at any time. So the designers have to increase safety coefficient in the structure design. The present fuselage structure weaknesses exhibiting in its tensile strength, rigidity and anti-fatigue strength are insufficient thanks to so many linking joints at the fuselage structure with stress complicatedly distributed. beams, frames, rafters, stringers, joint and covering skin link holes are the points wigh high concentrated stress. Any defects of design, manufacturing and material, even machining marks or covering skin scraped, will cause fatigue damage and disaster result. Moreover, several components are an integrated member, which must bear the alternating load with stress extremely uneven distributed. The stress exists in high concentrated points, which brings great difficulties to the design, manufacturing and fatigue test. The component such as rafter, stringer, joint and linking hole on covering skin themselves destroy the structure integration, make the tensile strength lowered down below the weakest strength and anti fatigue strength is lowered more obviously. The different linking methods also make the component strength lowered down, such as riveting. After riveting, the riveting hole produces a stretching stress extended to all around. Such stretching stress creates extremely unfavored result to the component anti-fatigue strength under the alternating load. In 1954, 2 British Comet passenger plane had two accidents in successlon that is due to the fatigue cracks around the rivet holes on the skin at the linked position of fuselage and wing. Up to now, the airplane breaking up on the air often occurs. This problem can't be solved by shot peening to the skin or strengthening the rivet holes. Thanks to the fuselage structure without enough rigidity, the covering skin will be shrunk, or the micromotion wear is produced with other joint position, which will cause the cabin, especially, the oil tank seal damaged. This is also a difficult problem in the airplane manufacturing.

Traditional design of structure has little potentiality to reduce weight of structure. Such as American Fighter F-22, the sections for fuselage frame are connected by the form a little of lapping. Such form is realized by means of extending the beam of front fuselage into bulkhead of back fuselage, so that the weight of double bulkheads at joint part can be reduced.But the connection of such form shall bear the tension on the top part of fuselage bulkhead and due to existing the beam. So, the effect of reducing the weight of structure is not obvious.

The compound materials have many advantages , such as high strength, but they still have some defects, such as aeolotropism due to the excessive difference of strength, it is easy to be laminated as which is effected with damp, with fragile material quality, the damaged point can't be seen by eyes if which is impacted by foreigh body, and it will cause disastrous consequences if the damages occurred in the key parts, Though the foreign impacts can be prevented by means of protective measures, they can't be removed completely. What we can do is to repair it repeatedly. The repairing of compound material is not simple like metal, with high cost for repair and it will cancel out the advantages of the material, so that some parts of aircraft should be made of metal material.

According to statistics, the fatigue damages account for 50% - 80% of breakdown of machinery parts. Especially the aircraft, the fatigue can cause destructuon has more effect. At present, the design of structure can't solve fatigue breakdown completely, especially in compound material, even doing full-scale fatigue test for it.

Metal material can raise the tensile strength several times and increase the effect of fatigue resistance by means of heat treatment and other technology treatment. After heat treatment, the strength and hardness of material will be raised respectively, so that, the material is difficult for machining work. Besides, it is very possible for producing the heat-treated internal stress and cracks and also sensitive to the notches. Especially to large-size, comple cated and thin-wall parts, it is very difficult to increase their strength by adopting process measure, and such component is in common use at aircraft manufacturing.

Variable sweptback wing can resolve the contradiction between air lift in slow-speed and shock-wave drag high-speed flight, which is making flight safer and more economical and reducing storage space, especially to ship-board aircraft, but problems as increasing structure weight and reducing reliability still exist. Angle wing aircraft's structure is simple and light, but the connecting rigidity wing and fuselage is not good, which can cause vibration easlly. The aerodynamic characteristic is changed due to swept-forward in one side and swept-back in one side, which will cause an effect on the aircraft's manipulation and safety, so that the problems relating to sweepable wings such as connecting, strength rigidity and vibration, increasing structure weight and flight performauce can not be solved, thereby the variable sweptback wing can't be used widely.

The airplane with swept-forward wings can optimize the flight performance in high-speed and low-speed, but it is difficult to solve the sweep forward wing's elastic divergence with existent strength of matenals, which causes its study and probing in standstill..

The design of aircraft structure is developed based on static strength, safety life, breakage safety, damage tolerance to consider reliability, but the increasing structure weight with the increasing structure strength, which is forced to develop high-strength materials. Up to now, the utilization of high-strength material makes cost grown in step with effect, even cost grows much more greatly than effect, so that the wide use of which is very difficult.

The tendency is today for the developing direction of airplane to large-size, long-range and high-speed more and more, its structure requires that high strength and rigidity, big thrust-weight ratio, safety and reliability long life, low cost of manufacture, especially in the fatigue resistance, anti-break and anti-accidental damage for the structure , which becomes alway into an important hindrance restricting development in aviation industry. For several decades of year, aircraft structure is designed in an orderly way and step by step, no breakthrough has been made. It is very clear that there is a technical prejudice against the design of aircraft structure, which does not lead to consider any other possibility and hinders the study and development at this field. It seems that it is necessary to find another way to solve the existent problem of aircraft structure.

The object of the present invention is to provid prestressed structure for aircraft and the method of producing the same, which adopts the prestressed structure consisting of prestressed member and prestretched member or adding filling materials to form the whole carrying structure in the carrying structure for aircraft, such as airplane, and make the carrying structure produces a prestress which is more greater than the max. allowable stress, so that the aeroplane's structure strength, rigidity, especially the fatigue resistance and anti breaking strength are increased, and the weight of structure, the cost of manufacturing and use are reduced.

The another object of the present invention is to provide a aircraft with variable sweptback wing such as carrying structure of airplane . The adopting prestressed structure and the flexible prestressed connection at the sweeping mechanism shall solve the problems of connecting strength, rigidity, fatigue resistance and vibration of outer wings is prevented ..

### Disclosure of the Invention

The object of the present invention is such realised that, aircraft's beams, frames, fuselage frame, central wing case, horizontal tail rertical tail, longitudinal stringer, radial stringer, stringer, rafter, integraled wall board, floorboard, engine fan blade, actuating cylinder axes pivot, stabiliser, rudder, flap, variable sweptbad wing's sweeping connection mechanism, and other components which, adopt partially or completely prestressed components of prestressed structure. The prestressed structure includes prepressed members and prestretched members or added with fillings, with which the aircraft loading components above-mentioned are formed during manufacturing, assembling or utilizing, a prestress is produced ,which is large than the max, allowable stress but smaller than yield strength, the prestressed components are formed. The prestretched members are embedded in the prepressed members or contained with the prepressed members. The prestretched members such as prestretched ring, pull rods, riveted, pull rods, ropes, tubes, cloth, mesh band , lacing wire , wire rash, skeleton are made of metal materials as high-strength steel and titanium alloy aluminium alloy and other alloy or fibre-reinforced composite materials or a metal material of bimetals its shape is determined based on structure form and bearing force requirement for aircraft's loading component. The prepressed members are the structure body of above-mentioned loading components, which are made of metal materials or matrix compound materials. In the structure, the prestretched members are pretastened to produce prestress, whose expanding end connects with other component. Fillings are filled between the prestretched members and prepressed. Fillings are filled between the prestretched members and prepressed members. which are made into an integral. The fillings contain partially or completely the prestreched members. The prepressed members , with the use of fillings or directly contain the prestretched members, or are contained by the prestretched members, to combine into an integral. The connection with other is mainly hole connection. The carrying structure of whole aircraft, which is made of this prestressed structure, while being manufactured, assembled or used, a prestress which is more greater than the max. allowable prestress but smaller than the yield strength, is produced to become into prestressed component. The complicated and orderless alternating load in the structure decomposed into ordered tension and pressure, which are respectively borne by different components. In the structure, the prestretched members produce prestretching force and bear prepressing and external tension. The prepressed members bear pretension and external pressure. The fillings combine both components into an integral and make the structure to keep prestress, or the prestretched members and the prepressed memers directly combine into an integrated prestressed component. When the components produce external tension, the prerension shall be cancelled by the prepressing existed in the prestretched memberst. When the components produce external pressure, the pressure shall be cancelled by the pretension existed in the prepressed member, so that, only if the external force acting on the component is less than its max. prestress (it means that the prestress is larger than the max, allowable stress), the component shall no longer bear the alternating load, thereby the same component avoids fatigue failure due to bearing the alternaing load, and reduces the load's alternating quantity which may increase load doubly at times.

The prestressed structure for aircraft, which is provided by the present invention, has forms as follows:
prestretched ring prestressed structure: a step is provided on the outside of the ring-shaped fuselage bulkhead, the bulkhead is a prepressed member, its step contains a metal ring-shaped ,prestretched ring as prestretched member having a stationary fit therewith, after heated, the prestretched ring is pressed onto the step of the bulkhead which produces prestress after cooling, thereby the strength and rigidity of the bulkhead are increased.
riveted pull-rod prestressed structure: which uses ultralong rivet-shaped pull-rod made of metal materials as prestretched member, the sleeve and the frame made of metal are as the prepressed members , the heated riveted pull-rod is embedded in the prepressed member , the both ends extended from prepressed member are riveted into an integrated loading compoment , when the riveted pull-rod is cooled and shrank, the components produce prestress.
pull-rod prestressed structure: which uses ultralong single-head or double-head bolt pull-rod made of metal material as prestretched member, whose shapes include straight, reducing structure or straight, circle, semi-ring with ribs at the middle, the prepressed members are variods beams, frames, longitudinal stringers, rafter, integrated wing, horizontal tail, vertical tail, central wing case made of metal materials or non-metal matrix compound materials,which form fuselage structure and aerodynamic configvration, the prestretched members are embedded in the prepressed members or contained in the prepressed members, its screw-thread end or extended from the prepressed members is connected with the other components, Fillings are filled between them and make them combine into an integral, or the prepressed members made of matrix compound materials contained the prestretched member directly make into the integrared component, during forming of the components, the prestretched members are prefastened, the filling and the matrix compound materials are be solidified at normal or high- temperature, the prehen force must be kept during the solidifying, after the fillings or the matrix compound materials are solidified, the components keep permanent prestress, for connecting the ultralong compnent's connection, the sectional prefastening and sectional solidifying can be adopted to strengthen the prefastening force, when high-temperature solidifying is adopted, the thermal expansion coefficient of the prestretched members must be bigger than that of the prepressed members.
rope prestressed structure which includes ropes or variable-diameter ropes made of metal or fibre reinforced compound materials as prestretched members, the fuselage structure and aerodynamic configuration consists of beams frames, longitudinal stringers, rafter central wing case, horizontal tail, vertical tail and wing combination body as prepressed member onich are made of metal or matrix compound materials, the ropes are embedded in the prepressed members or fillings are filled between them and combine them into a integral, the rope as prestretched members or contained with the prepressed members or the ropes with the prepressed members made of matrix composund materials combine directly into an integral, during the manufacturing or assembling, the ropes are contained and prefastened by the fillings or compound materials, the filling and matrix compound material are solidified by use of normal or high-temperature, the components produce permanent prestress after solidification, when high-temperature solidifying is adopted, the thermal expansion coefficient of the prepressed member must be larger than that of the prestretched member.
Metal or compound material prestressed structure which includes ropes, pull-rods, tubes, wire, mesh and grid made of metal materials as prestretched members, skeletons made of metal materials, beams, frames, integrated wings, central wing case, wing combined body, horizontal tail, vertical tail, integrated wallboard, floor board , pivots, fan blades and so on made of matrix composite materials, which form the component of fuselage structure and aerodynamic configuration as prepressed members, the thermal expansion coefficient of prestretched member is bigger than that of the prepressed members, the prestretched members are covered by the prepressed members or cover the prepressed members, the manufacturing method is as follows: according to the required shapes and bearing force of the components, the prestretched members shall be made into a bearing skeleton of the above-mentioned components and placed into the preformed mold with the other related components, and leaving the connecting members and connecting holes thereto in advance, the pretightening mechanism is adopted to prefasten the prestretched member, normal or high temperature forming is adopted,when adopting normal temperature forming, the component is placed at ambient temperature and is then prefastened, the matrix compound material is filled into the preformed mold and is then formed and solidified, for the thin-wall components, the matrix compound materials shall be made into blanks and placed into the preformed mold together with the skeletons, then are prefastened, when the compound materials are solidified, the components produce prestress, when high-temperature solidifying is adopted, the thermal expansion coefficient of the prestretched members must be bigger than that of the prepressed members, when forming, the whole component shall be heated to a suitable temperature. the prepressed members shall be prefastened after its expansion, the heat shall be preserved for some time, after the matrix compound materials are solidified which are combined with the prestretched members into an integral, the prestretched member shall be cooled and shrunk, thus the components produce powerful permanent prestress, if necessary, short wire or deformed short wire shall be mixed into the matrix compound materials.
the thermal expansion prestressed structure is used for the engine fan blades, the fan blade core or skeleton made of metal materials are used as prestretched members or prepressed members, the fan blade outer layer made of metal materials or fibre-reinforced compound materials are as prestretched members or prepressed members, the prestretched members cover the prepressed members and combine them into the fan blades, when the thermal expansion coefficient of the sandwiched core or the skeleton is bigger than that of the outer layer materials, the outer layer contains the sandwiched core or the skeleton, and the both parts are combined into an integral, during the running, the temperature shall rise and make the sandwiched core or skeleton expanded, and then the blades produce prestress, which are adapted to high- temperature conditions, when the thermal expansion coefficient of the sandwiched core or skeleton is smaller than that of the outer layer materials, the prestress is produced by heat-treating , which is adapred to low temperature condition.
fiber reinforced compound prestressed structure includes ropes, wires, mesh, clothe and belt made of fiber-reinforced compound materials acting as prestretched members; beams, frames, central wing case, longitudinal stringers, wings, horizontal tail, vertical tail, covering skin, floor, rubber, flap, stabilizer, nose, tail cone and propeller made of matrix resin compound material are as prepressed members, the prestretched members are contained by the prepressed members and combine them into an integral, to form the above-mentioned component structure and aerodynamic configuration, the manufacturing method is as follows: According to the component shapes and load requirement, the prestretched members are placed in the preformed mold, with setting up prestressing mechanism, the matrix compound materials are injected or painted to prefasten the prestretched members, normal or high-temperature forming for solidifying is adopted,when the matrix compound materials are solidified, the components shall produce permanent prestress, when high-temperature forming for solidifying is adopted, the thermal expansion coefficient of the prepressed members must not be bigger than that of the prestretched members.
bimetal prestressed structure includes tubes, bars, wires made of bimetal of bimetal materials with different thermal expansion coefficient of inner and outer layers, the actuating cylinder, landing gear sleeve, gun barrel, axes; pistons, propeller, fan blades and springs which are made of flat materials, the inner and outer metals are melted together, the outer layer contains the inner layer, both layers can act as prestretched members or prepressed members. According to the components shapes and load requirement aircraft's above-mentioned parts are manufactured, the components shall produce remaining prestress by hear treatment.

The another object of the invention is such realized in that, in the sweep linking mechanism of the variable-sweep wing, except for adopting lug connection, a set of flexible junction of rope prestressed structure is supplymented .In the structure, the outer wings and central wing case are connected with the lug, but they do not bear any outer extension. The structure bearing outer extension is the ropes placed in the four corners of the wing roots . The outer wings adopt the rope as prestretched members, the integrated prestressed component struture made of matrix compound, materials are as prepressed member the both ends of the rope are placed in the integrated component (outer wing)in direction of span, a closed section is left in the wing root, the closed section passed into the pulley block of the central wing case, which is prefastened to produce, the prestress. The outer wing is placed through connected the lug and rotating ring against the central wing case. With the affecting of actuating cylinder, the outer wings sweep forward and backward around the rotating ring. While sweeping, the outer wings are always placed against the central wing case. The ropes are always bearing the outer extension of the outer wings. The outer extension shall be cancelled by the existent prestress therein, so that the outer wings' vibration is avoided. If necessary, reinforced ropes shall be set up below the outer wings.

In the above-mentioned structure, the diagonal connection for rope can be adopted to connect the left and right wings, that is, each rope placed in the outer wings is left a length outside the wing roots. The front rope in the left outer wing passes into pulley on the central wing case and connects with the back rope in the right outer wing. The front cable in the right outer wing connects with the back rope in the left outer wing. The left-right-symmetric outer wings are crosswise connected together in the central wing case, pressed with the jockey pulley placed on the central wing case. When the outer wings sweep around the rotating rings, the keep ropes alway prestress the outer wings are placed gainst the central wing case and avoid the outer wings' vibration. Since the bearing load below outer wing is bigger than that of above, the strength of lower ropes can be increased or reinforced rope can be supplymented.

The another feature of prestressed structure for aircraft is in that to complete the connection of components depends on mutual cross of presrretched members. It can avoid a defect that high stress will be existed in key joint due to revoking joining component. The structure will become more reliability. Its prestress is uniformly distributed in every point of component and is fixed thereon, so that , the prestress shall not be reduced or disappeared whether a part or the adjacent parts are damaged or not.

Manufacturing method of prestressed structure for aircraft is in that the loading structure is consisting of prestretched members and prepressed members or adding fillings. When manufacturing, assembling and using the structure, the prestretched member is embedded in the prepressed member or is contained with prepressed member, then the prestretched member is pre-fastened by preset pretension mechanism. The fillings are filled into the space between them, or first added with fillings then to prefaster the prespretched member or the prestretched member is embedded during the filling is filled. The filling or the matrix compound material is solidified by use of normal or high-temperature forming, the component produces prestress. When using normal temperature forming, the whole component is solidified at the ambient temperature and is always prefastened during the solidification process. If adopting high-temperature forming, the heat expansion coefficient of the prestretched member should be bigger than that of the prepressed member. When making, the whole component is heated and which, keeps the temperature for a period with keeping the fastening force, the compound material is cooled after its solidification, then the prestretched member shrinks and creates permanent prestressed force. When in producing, assembling and using, the structure, produce a prestressed force which is bigger than its maximum allowable stress but smaller than its yield strength to decompose unordered alternating loading into ordered tension with the pressure borne by different components wherein the prestretched member bears prepressed force and outside tension, and prepressed member bears pretension and outside pressure. The filling combins both members into an integral which makes the structure to keep prefastening force.

When the prestretched member is made of metal material or fabric reinforced compound material; the prepressed member is made of matrix compound material, its producing method is that the prestretched member is made into loading skeleton which with other related member and connecting member are placed into a preformed mould, according to the component shape and load requirement. The prestretched member is prefastened by preset prefastening mechanism, and the matrix compound material is filled into the preformed mould, then to solidify the matrix compound material is adopting the normal or high temperature forming. The prestretched member keeps always prestressed force during solidification. The components produce permanent prestressed force after solidification. Short metal wires can be mixed in the matrix compound material if necessary.

When the prestretched member is made of metal material or fabric reinforced compound material, the prepressed member is made of matrix compound material, its producing method is in that the prestretched member is made into loading skeleton based on the component shape and load requirement. The prestretched member and other related member and connecting member are covered with the matrix conpound material based on component shape, which are as prepressed member and are made into blanks and are then placed into preformed mould. The prestretched members are prefastened by the preset prefastening mechanism, then to solidify the matrix compound material is adopting normal or high-temperature forming. The prepressed member keeps always the prefastening force during solidification of the material, the components produce permanent prestressed force after solidification. Short metal wire can be mixed in the matrix compound material if necessary.

The fan blade of aircraft engine is made of metal skeleton whose section is in wave shape. The skeleton is as prestretched member or prepressed member ; the matrix compound material is as prestretched member or prepressed member. Its manufacturing method is in that the reinforced fiber threads through the holes of the skeleton and connects to the longitudinal reinforced fiber. The metal skeleton is covered by matrix compound material as an integrated component which is placed into the preformed mould. The matrix compound material is solidified by means of normal temperature or high temperature forming.

When the fan blade of aircraft engine is consisting of blade sandwich core and blade outer layers that are made of metal material, the blade outer layer covers blade sandwich core. Material of blade outer and inner layer is different in thermal expansion coefficient. If thermal expansion coefficient of blade sandwich core is larger than that of the outer layer, the sandwich core is used as prepressed member, and outer layer as prestretched membert. The sandwich core expansion will produce prestress while temperature rises. If thermal expansion coefficient of blade sandwich core is smaller than that of the outer layer, the sandwich core is used as prestretched member, and outer layer as prepressed member. The component will produce prestressed force after heat treatment.

There are some components, such as actuating cylinder, undercarriage outer sleeve, gun barrel, axle, piston, pull-rod, propeller, laminated spring and etc, are used to manufacture aircraft and made of bimetal prestretched tubes, bar, wire and flat profile. The component consists of inner and outer layer with different thermal expansion coefficient. Outer layer contains inner layer without clear interface in inner and outer layer. The component will produce residual prestress by means of heat treatment.

According to above-mentioned illustration, the prestressed structure and manufacturing method for aircraft overcomes some defects, such as complicated structure, non-uniform stress distribution, stress concentration point existed, low fatigue strength, big alternative loading, easy break, complicated manufacturing technology, requirement of high precision and high cost. It can improve structural strength and rigidity of aircraft, and settle the problems of fatigue resistance and break protection. The structure achieves different objects of loading by means of full use different features of materials. It will achieve optimum strength of its material in components by means of technical measures. There are some features in the structure, such as easy processing and manufacturing, high utilization ratio of material, wherein. Tensile member of the structure is an integral. It will remove joint rabbet, intersecting hole to avoid stress concentration, especially in rope structure. Thanks to the unique feature of structure and its damping action, the structure owns some features, such as high fatigue resistance, high shock resistance, high break protection, alterable the of bearing force, randomly .Thanks to the size effect and manufacturing technology, the possiblity of manufacturing defect for prestretched members is little, so that it can meet the requirement of unlimited life design without consideration of damage tolerance limit. Analogue test is proved that the prestressed structure can reduce weight of aircraft structure more than 20%,wherein the double fuselage bulkhead can reduce weight more than 50% . The structure can raise the strength of fatigue resistance several times

### Summary Description of Drawings

The following illustration will make further explanation, by combining attached drawings and embodiment to the invention.

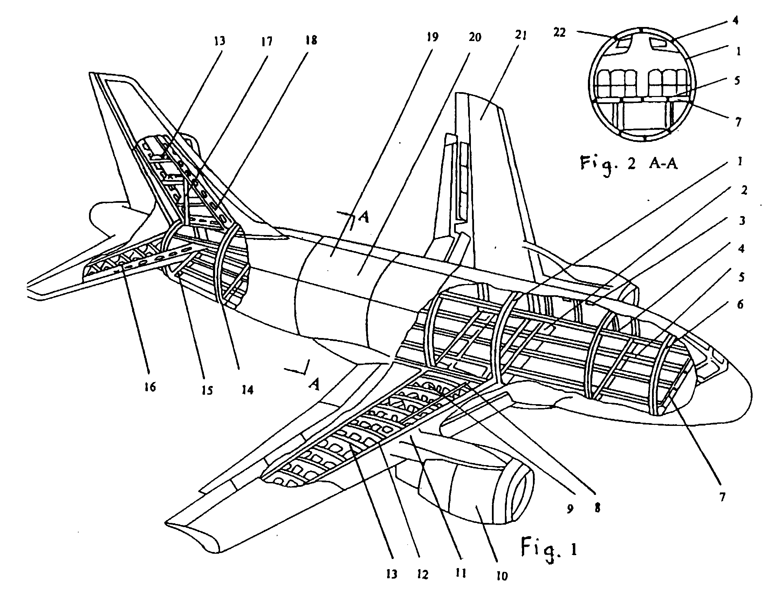

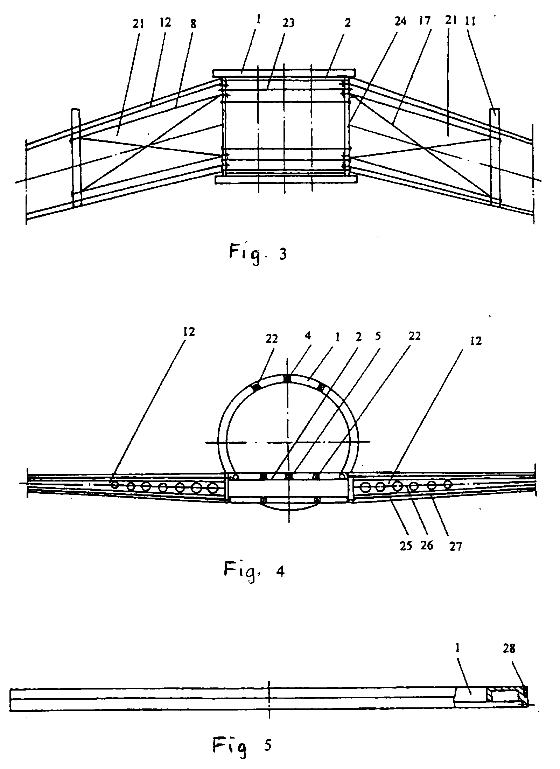

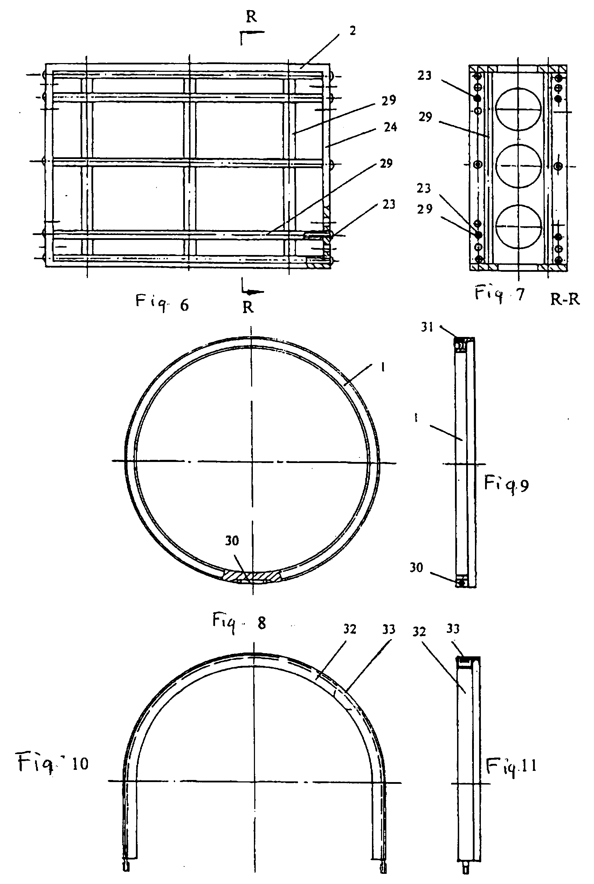

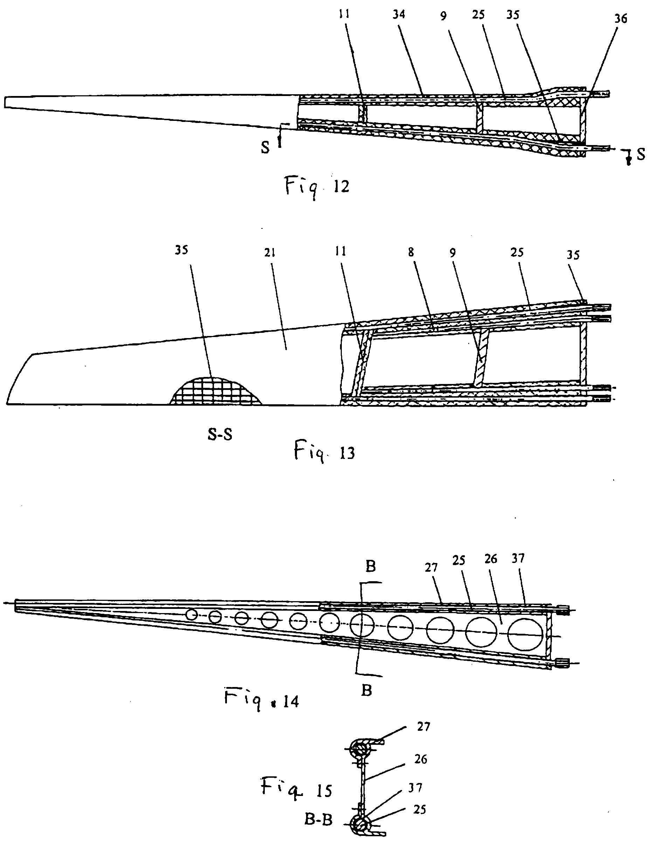

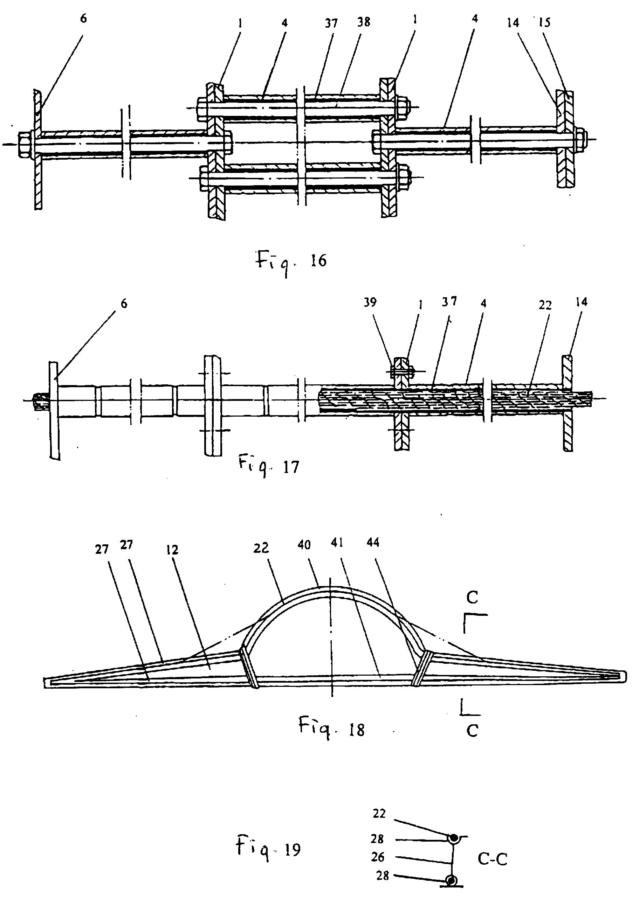

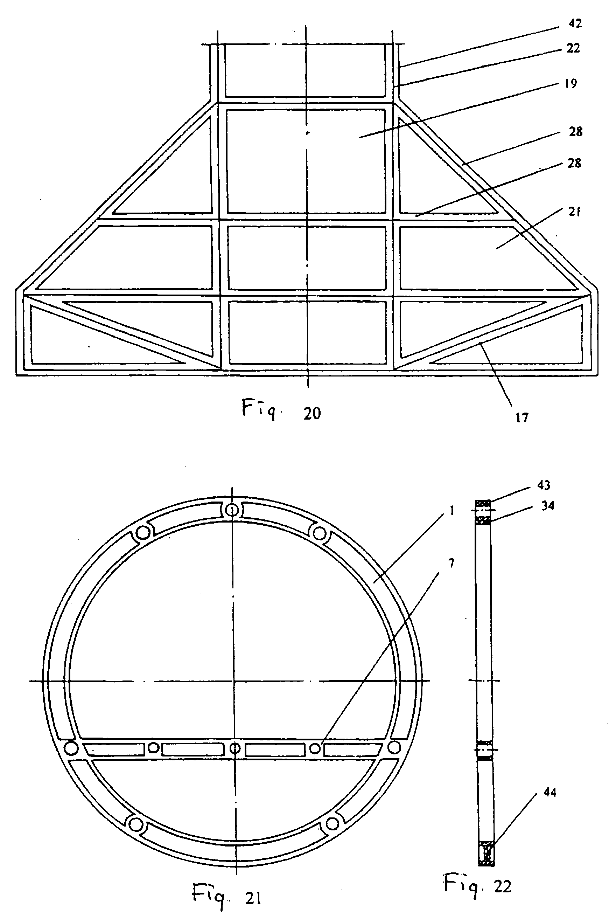

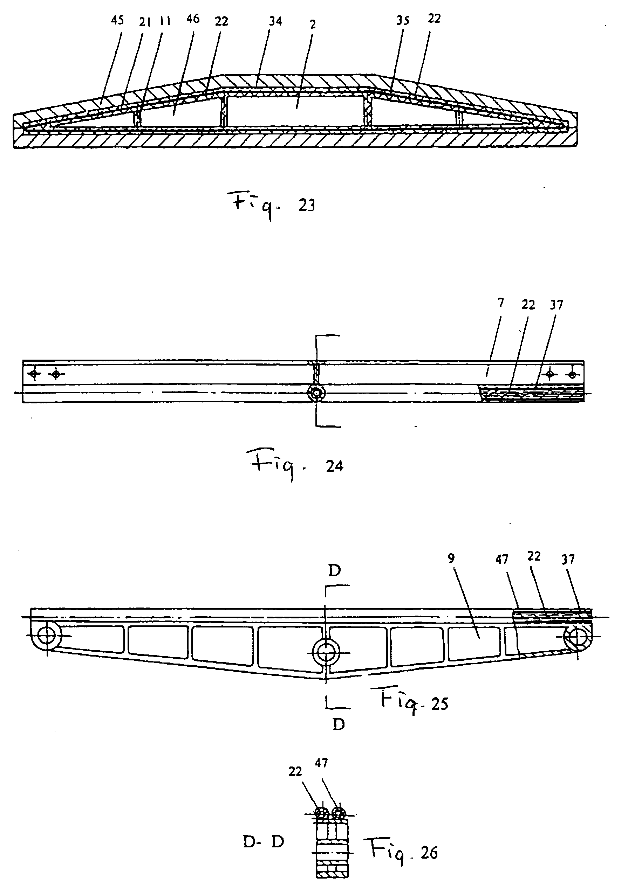

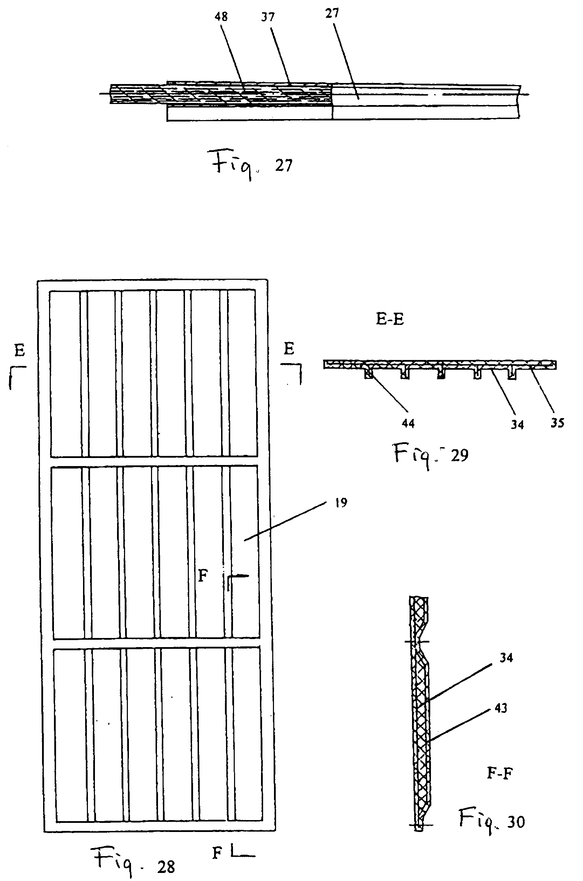

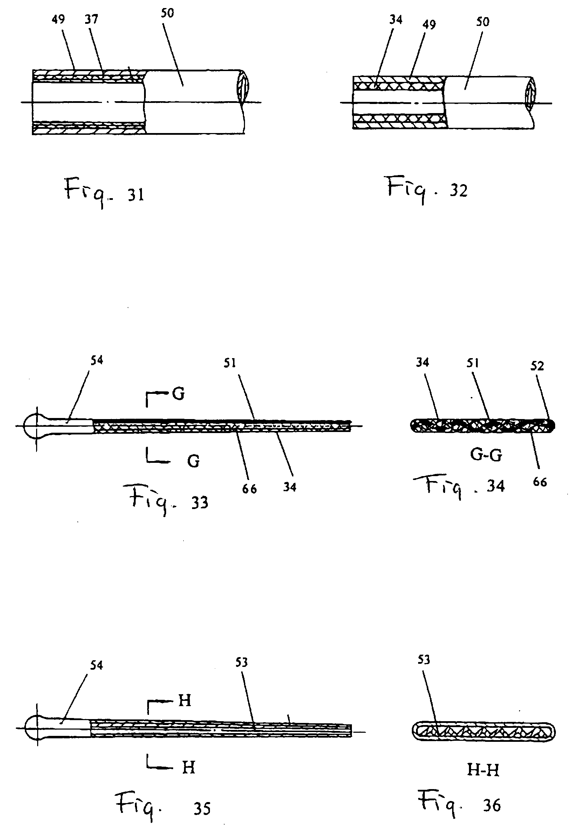

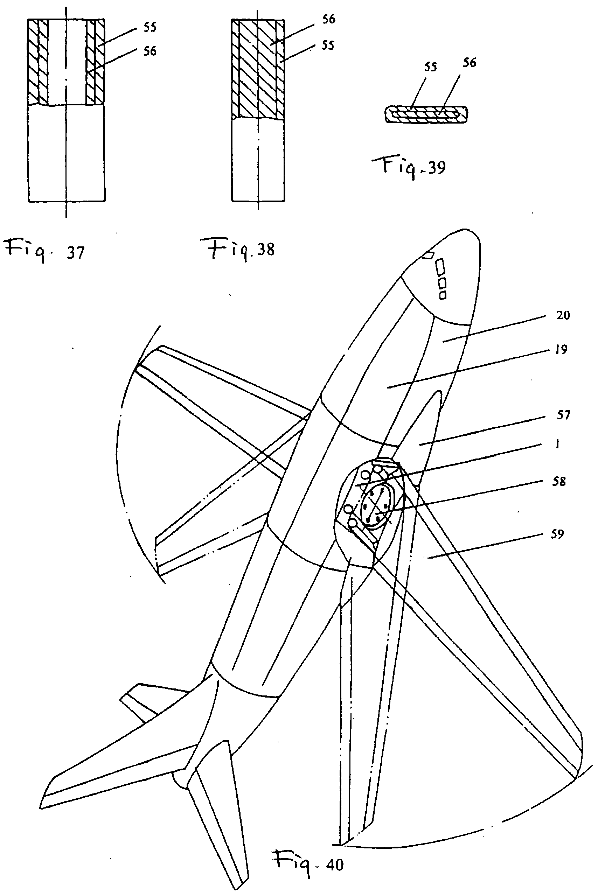

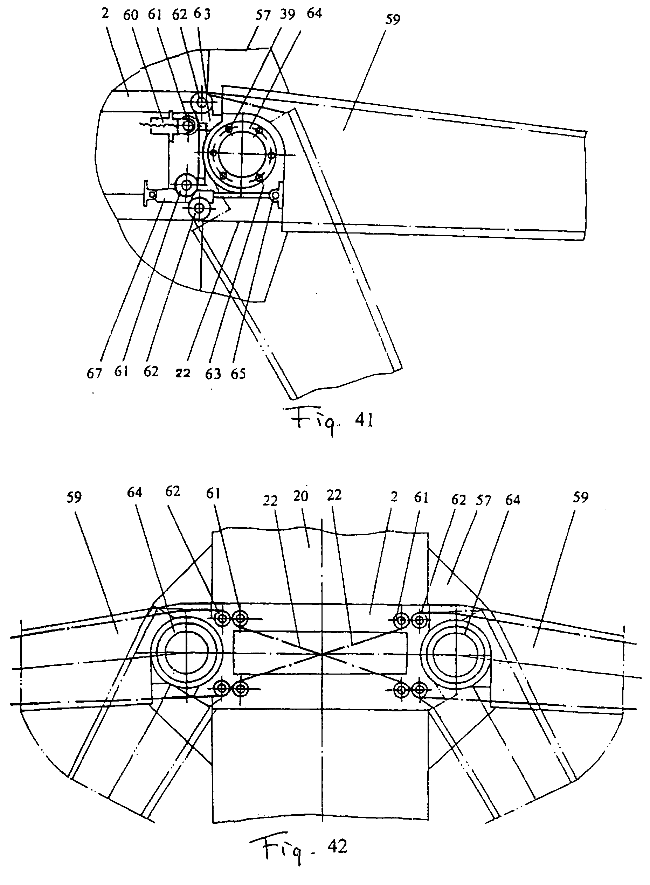

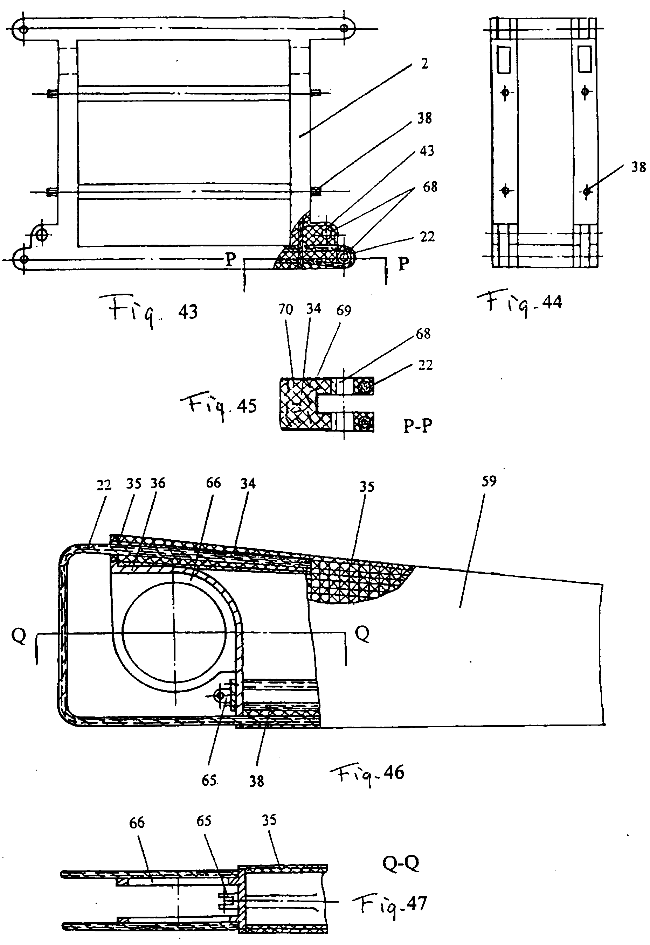

Fig.1 is a schematic view showing the prestressed structure for passenger plane in circular section of fuselage according to a embodiment; Fig.2 is a sectional view of the structure along A-A shown in Fig.1; Fig.3 is a schematic view showing the connection plan of central wing case, fuselage bulkhead and wing; Fig.4 is a sectional schematic view showing the structure shown in Fig.3; Fig.5 is a schematic view showing the fuselage bulkhead structure of the pretensioned ring prestressed structure; Fig.6 is a schematic view showing the central fuselage case structure of riveted pull-rod prestressed structure; Fig.7 is a side view of R-R in Fig.6; Fig.8 is a schematic view showing the fuselage bulkhead structure of the pull-rod prestressed structure; Fig.9 is a sectional view of the structure is Fig.8; Fig. 10 is schematic view showing the arched mechanical frame of the pull-rod prestressed structure; Fig.11 is a sectional view of the structure shown in Fig.10; Fig.12 is a schematic view of pull-rod integrated wing structure; Fig.13 is a schematic vertical sectional view of the structure S-S in Fig.13; Fig.14 is a schematie view showing the structure of the pull-rod prestressed structure combined spar;Fig.15 is a sectional view of the structure B-B shown in Fig.14; Fig.16 is a schematic view of the longifudinal pull-rod prestressed structure fuselage connection; Fig.17 is a schematic view of the longitudinal rope prestressed structure fuselage connection; Fig.18 is a schematic view of the rope prestressed wing-fuselage combined body structure; Fig.19 is a sectional view of the structure C-C shown in Fig.18; Fig.20 is a planar schematic view of the structure shown in Fig.18;Fig.21 is a schematic view of the integrated fuselage bulkhead prestressed structure; Fig.22 is a sectional view of the structure shown in Fig.21; Fig.23 is a schematic view of the integrated wing fuselage combined body rope prestressed structure; Fig.24 is a sehematic view of the floorboard beam rope prestressed structure; Fig.25 is a schematic view of the undercarriage supporting rope prestressed structure; Fig.26 is a sectional view of the structure D-D shown in Fig.25; Fig.27 is a Schematic view of the variable-diameter rope rafter and variable-diameter rope combined prestressed structure; Fig.28 is a schematic view of the integrated wallboard prestressed structure; Fig.29 is a sectional view of the structure shown in Fig.28; Fig.30 is a sectional view of the structure F-F shown in Fig.28; Fig.31 is a schematic view of the bimetal sleeve compound material pivot prestressed structure; Fig.32 is a schematic view of the single-layer metal sleeve compound material pivot prestressed structure; Fig.33 is a schematic view of the prestressed structure for engine fan blade; Fig.34 is a sectional view of the structure G-G shown in Fig.33; Fig.35 is a schematic view of the bimetal fan blade prestressed structure; Fig.36is a sectional view of the structure H-H shown in Fig.35; Fig.37 is a schematic view of the bimetal tubes prestressed structure; Fig.38 is a schematic view of the bimetal bars or wires prestressed structure; Fig.39 is a schematic view of bimetal flat profile prestressed structure; Fig.40 is a schematic connecting view of the changing sweptback wing prestressed structure; Fig.41 is a schematic view of sweeping mechanism prestressed structure; Fig.42 is a schematic view of the sweeping mechanism ( other embodiment ) prestressed structure; Fig.43 is a schematic view of rope compound material integrated central wing case prestressed structure; Fig.44 is a sectional view of the structure shown in Fig.43; Fig.45 is a sectional view of the structure P-P Shown in Fig.43; Fig.46 is a schematie view of the in tegrated sweepable owter wing prestressed structure; Fig.47 is a sectional view of the structure Q-Q shown in Fig.46.

Fuselage bulkhead 1, central wing case 2, radial stringer 3, longitudinal stringer 4, longitudinal floorboard beam 5, fuselage from bulkhead 6, transverse floorboard beam 7, reinfarced spar 8, undercarriage bearing beam 9, engine 10, engine suspension 11, spar 12, wing rib 13, fuselage rear bulkhead 14, tail beam15, horizontal tail beam 16, torsional pull-rod 17, vertical tail beam 18, integrated wallboard 19, fuselage 20, wing 21, rope 22, riveted pull-rod 23, frame 24, reducing pull-rod 25, web 26, rafter 27, pretensioned ring 28, sleeve 29, bidirectional nut 30, annular pull-rod 31, arched frame 32, semi-ring-shaped pull-rod 33, matrix compound material 34, metal wire-mesh 35, wing butt connection board 36, filling 37, straight pull-rod 38, bolt 39, upper beam in fuselage 40, under beam 41, longitudinal beam 42, lacing wire 43, metal wire 44, preformed mould 45, fuel tank 46, channel-section tube 47, reducing rope 48, outer sleeve 49, povit 50, framework 51, contained surface 52, sandwich core 53, fan blade 54, outer layer 55, inner layer 56, inner wing 57, sweep mechanism 58, outer wing 59, pressed device 60, jockey pulley 61, fixed pulley 62, lug 63, rotating ring 64, abutment 65, fiber 66, actuating cylinder 67, bush 68, frame 69, short metal wire 70.

### The Best Mode Embodying the Lnvention

In the Fig. 1, 2, 14, 15, 16, 17 and 27, some components completely or partially adopt prestressed structure, such as fuselage bulkhead 1, central wing case 2,radial stringer 3,longirudinal stringer 4,longtudinal floorboard beam5,fuselage front bulkhead 6, transverse floorboard beam 7, reinforced spar 8 undercarriage bearing beam 9, engine 10, engine suspersion 11, spar 12, wing rib 13, fuselage rear bulkhead 14, tail beam15, horizontal tail beam 16, orsional pull-rod 17, vertical tail beam 18 and integrated wallboard 19. As will be rapidly seen from the drawings that central wing case 2 is as center to connect two sets of fuselage bulkheads 1 at the two sides. Longitudinal stringer 4 is provided in the space of two sets of fuselage bulkhead 1 which are connected together at both ends of the central wing case. The section of longitudinal stringer 4 is T-shaped, H-shaped or other shaped, its longitudinal hole is provided for the prestressed rope 22 or threading pull-rod 38 (see Fig. 15 and Fig. 17). Radial stringer 3 connects with longitudinal stringer 4. Integrated wallboard 19 connects with fuselage bulkhead 1, longitudinal stringer 4 and radial stringer 3. Other section consists of fuselage front bulkhead 6, fuselage rear bulkhead 14, longitudinal stringer 4, radial stringer 3, longitudinal floorboard beam 5 and transverse floorboard beam 7. Fuselage is docked after all sections of fuselage are assembled. The relevant holes in the longitudinal stringer 4, longitudinal floorboard beam 5 and central wing case 1 are connected each other. The holes are used to place prestretehed member rope 22. The whole fuselage, from fuselage front bulkhead 6 to tail beam15, is connected together and prefastened with single integrated rope 22 and the filling 37 is filled. After solidification, the fuselage 20 will produce permanent prefastening force due to forming shrink from two sides to central. The ends of rope 22 are fixed in nose and tail end,So that the fuselage forms into a structure without beam The longitudinal stringers 4, longitudinal floorboard beam 5 and central wing case 2 of fuselage 20 in up-and-down position will function as fuselage beam, and the height of fuselage 20 is more than that of the beam, so that the upper part of fuselage 20 bears much smaller stress.The prestretched member rope 22 shall bear the whole external tension of fuselage 20. Each bulkhead of fuselage, longitudinal stringer, central wing case and fuselage envelope no longer bear external pulling force. Moreover, the fuselage bulkhead itself is also a prestressing component,so that which can reduce 50% of weight in double bulkhead of each section fuselage. Fuselage bulkhead can be manufactured in the way of sheer metal forming , so that the strength and rigidity of integrated fuselage are increxed, fuselage's ability of bear differential pressure from outside and inside is substantialy improved , and sealing degree of passenger cabin is more reliable . For the large-scale aircraft, dueto the fuselage is too long, the longtudinal prestretched member rope 22 can adopt such a measure, that is sectional pretastening and solidification in order to increase the prefastening force of the structure 22, if necessary. The presstressed componenr of tail consists of fuselage rear bulkhead 14, tail beam 15, horizontal tail beam 16 and vertical tail 18. Tail beam 15 is a frame, which is connected with presstretched member rope 22 on fuselage 20 into an integral. Vertical tail beam 18 and horizontal tail beam are consisted of front and rear spar with prestressed structure. Upper and lower rafters are as prepressed members to spar, and connected with web. Reducing pull-rod 25 (prestretched member) is placed in the rafter 27 (see Fig. 27). Front and rear spars are connected with wing rib 13. All sets of prestressing components are jointed crosswise in the frame which consists of tail beam 15 and fuselage rear bulkhead 14. In order to increase torsional strength in the structure, the torsional pull-rod 17 will be clinodiagonally distributed to form a loading structure of whole tail, if necessary, prestressing components will be strengthened in concentration area of stress, except above structure. Above memtioned structure can also adopt prestretched members and matrix compound materials as prepressed member to form integrated parts.

In Fig. 3 and 4, the wing 21 is consisting of spar 12 and reinforced spar 8, the spar 12 and reinforced spar 8 adopt prestressed structure, which are consisting of rafter 27, web 26 and reducing pull rod 25. Reducing pull-rod 25 is as prestretched member, and rafter 27 as prepressed member, the prepressed member contains prestretched member, which are riveted by means of web 26, into integrated spar 12 and reinforced spar 8. The screw part of reducing pull-rod 25 is extended from the wing root of spar 12 and is linked on the frame 24 of the central wing case 2. Engine suspension 11 adopts prestressed structure and connect to spar 12 of wing. If adopting rope structure, the rope 22 threads through the preset hole in the central wing case frame 24 to connect spar at two sides. The quantity of spar 12 will be determined based on structure form and loading scale.

In Fig. 5, the fuselage bulkhead 1 and pretensioned ring are closed annular body. Bulkhead 1 is as prepressed member, pretensioned ring as prestretched member, and the prestretched member contains prepressed member. The in-wall of pretensioned ring is a plane, and which adopts stationaly fit with step of fuselage bulkhead 1. When manufacturing, the pretensioned ring 28 will be heated (the heating temperature can not be over the tempering temperature), and is pressed into the step of fuselage bulkhead 1. After cooling, the component will produce prestressed force. The convex edge is provided on the fuselage bulkhead, which is used to connect with envelope.

In Fig.6, 7 and 16, the central wing box 2 consists of 2 quadrangular prestretched member frame 24 and sleeve 29. The sleeve 29 owns vertical, horizontal, upper and lower layers, which are connected to the frame 24. The upper longitudinal sleeve 29 can be replaced by longitudinal floor board beam. In above-memtioned structure, the holes on the sleeve 29 which is longitudinally placed are used for longtudinal pull-rod 38 or rope 22 to pass through to connect sections of fuselage together when connecting fuselage. Horizontal sleeve 29( prepressed member) is provided with riveted pull-rod 23 (prestretched member) to connect frame 4 on the two sides. The manufacturing method is to heat the riveted pull-rod 23 especially the head to its critical temperature and which is threaded rapidly into the hole in the horizontal sleeve 29 and riveted. The riveted pull-rod 23 is shrand after cooling, the component produces then a prestressed force. The frame 24 can be made into trapezium in the form of taper, so that to connect the wing 21 easily. The angle of the bevel edge is approximate to or as same as that of sweptback angle of the wing 21, thereby to manufacture the wing 21 will be more easily. Holes and holes with screw-thread are provided on the perimeter of the frame for easy connection with other components.

In Fig, 8, 9, fuselage bulkhead 1 is a ring-shaped body in the present embodiment, there is a groove on the outer surface of the perimeter and an indentation at the bottom of the bulkhead, the ring-shaped pull-rod 31 acts as prestretched member which is in the form of stud bolt with different turning direction on its two ends, the screw-thread section is straight, the fuselage bulkhead 1 is prepressed member, ring-shaped pull-rod 31 is placed into the groove on the fuselage bulkhead 1, and bolt section is placed into the position of the indentation, the ring-shaped pull-rod 31 is tensioned with double-turning direction nut 30 to make the fuselage bulkhead 1 produce prestressed force. Moreover, holes are distributed in the bulkhead 1 and there is a convex brim is on its outer perimeter used to connect with other components and fuselage envelope.

In Fig.10, 11 an arched frame of fuselage is provided. The arched frame 32 has a groove and a convex brim on its outer perimeter. The arched frame 32 acts as prepressed member, half-ring shaped pull-rod 33 is prestretched member which is placed into the groove of the arched frame 32, its screw-thread section of the two ends extends and connects to other components,the component produces prestressed force after connection . The convex brim is used to connect the envelope of the fuselage. The arched frame is suitable for rear fuselage of cargo airplane.

In Fig. 12, 13, the wing 21 adopts prestressed structure, which consists of reducing pull-rod 25, reinforced spar 8, metal-mesh 35 and matrix compound material 34. The reducing pull-rod 25, reinforced spar 8, metal-mesh 35 are prestretched member; The matrix compound material is prepressed member, The thermal expansion coefficient of prepressed members is bigger than that of prestretched members. The prepressed members cover the prestretched members. The reducing pull-rod owns reducing end or concentric reducer and central ribbed structure with screw-thread on the larger end. One side of the reinforced spar 8 has screw thread, which is passing through the connection board 36 of wing root from the wing root part and connects to central wing box 3. Tail of the pull-rod can be connected at the wingtip. The metal-mesh 35 is provided in the envelope layer, the metal wire in span direction is reducing structure its larger end is connected to the wing root connecting plate 36. Engine suspension 11 and undercarriage support beam 9 are provided on the wing transversely. Their frame and the wing 2 can be made at the same time. Diagonally torsional pull-rod 17 can be disposed between the two set of spar when necessary. The above-mentioned prestretched members are formed into framework which is placed into preformed mould together with component as the fuel tank 46 provided therin, there is a prefastening echanism, the matrix compound material 34 is filled the preformed mould, or the matrix compound material 34 is formed into blank at first, which is then placed into preformed moald together with the framework, and is heated, the prestretched member is prefastened, for a while preserving temperature, after the compound material is solidified and cooled, the prestretched member shrinks and produces prestressed force. Short metal wire 70 can add into the matrix compound material 34 to increase its strength and rigidity when necessary.

The integrated horizontal tail fin and vertical tail fin can also adopt above-mentioned same or analgous structure and manufacturing method.

The above-mentioned prestressed integrated wing is effective to preventing swept-forward from aerodynamic elasticity volatilization.

In Fig. 14, 15, the reducing pull-rod 25 is as prestretched member which is a structure with reducing end or central ribbed, the reducing pull-rod with screw-thread at a end is used together with rafter 27 with holes. The rafter 27 with holes can be made into reducing end and can be formed into an integrated spar together with web 26 and wing rib 13. Which is then as prestretched member. the prestretched member reducing pull-rod 25 is past into longitudinal holes of the rafter 27, the filling 37 is filled, or at same time or to fill the filling 37 at first the reducing pull-rod 25 is prefastened, which adopts normal or high-temperature forming to make filling solidification , after solidification of the filling 37, the component produces permanent prestressed force, The screw- thread section extended from rafter of the reducing pull-rod is used for connection. The structure can be prefastened from the smaller end to the larger end by injecting filling and solidification sectionally to ensure the structure for sufficient prefastening force. The structure is light and suitable for horizontal tail beam and vertical tail beam. Distortion ribbed structure can be used in reducing pull-rod 25 and rafter (27) to increase conjoint performance of fillings, prestretched member and prepressed member. Because prestressed force is distributed on each point of the structure, so that the structure keeps balance well. When above-mentioned structure abopts high temperature forming, heat expension coefficient of prestretched members shall be bigger than that of prepressed members.

In Fig.16, and Fig.1, 2, the longitudinal connection of the fuselage can adopt straight pull rod 38 connection, when connecting sections of the fuselage, the straight pull-rod 38 passes through the holes on the bulkheads, longitudinal stringers 4, longitudinal floorboard beam 5 or central wing box 2 and connects to double bulkhead 1 next to the upper or lower fuselage. The straight pull-rod 38 is as prestretched member and others are prepressed members, the double bulkheads of the joints for fuselage sections are connected together. Central section of the fuselage bears relatively large load, so that the quantity of the straight pull-rod should be increased. Each straight pull-rod 38 connects three or more fuselage bulkheads. Prefastening the straight pull-rods 38 make the fuselage prouce a prestressed force which is distributing on the cricumference and shrinking from both ends to middle.. Filling 37 is filled into the space between the straight pull-rod 38 and the wall of the holes to solidify and makes the structure keep stable prestressed force when necessary. Because the straight pull-rod passes into the double bulkheads of the joints for fuselage sections and two bulkheads combine into a fuselage bulkhead to use, the joint of whole fuselage bulkhead and longitudl stringer bears no stress, so that the weight of the bulkhead reduce at least 50% without considering the effect adopting prestressed structure of bulkhead itself.

In Fig.17, 1, 2, rope 22 as prestretched member passes through the holes on the bulkheads of fuselage sections, longitudinal stringers 4, longitudinal floor board beam 5 (not shown) or central wing case. Two ends of the longituginal stringer 4 and vertical floorboard 5 connect to the bulkhead 1 and front and rear fuselage bulkheads. Two ends of the central wing case also connect to the bulkhead 1 (see Fig.3, 4). The double bulkheads of the joints for sections of fuselage are conected with bolt 39. Rope 22 passes into the holes after docking sections of the fuselage, sections of fuselage are in series together, and then filling 37 is filled in the space between the rope 22 and the wall of the holes and is prefastend. After the solidification of the filling 37, the fuselage 20 produces a prestressed force which is shrinking from both ends to middle. Quantity of the rope is determined by the load situation of the fuselage. Because the filling 37 connects the rope 22, longitudinal stringer 4, longitudinal floor board beam 5, central wing case 2 and bulkheads into an integral, that the stress is uniformly distributed on each point of the above-mentioned component, thereby , except for rope, other components bear no longer longitudinal outer tension, the front and rear bulkhead bear also not extra loading of fuselage sections . For fuselage and other ultra long components which can adopt prefastening and solidification sectionally to ensure the structure for sufficient prestressed force. Two ends of the ropes are fixed in the nose and the tail cone. The longitudinal stringer 4 and fuselage bulkheads provide convex rim to connect the fuselage envelope. In order to guarantee reliable connection of the prestretched members and the prepressed members by the filling, the holes on the prestretched and prepressed members can adopt distortion structure to prevent slight friction between the prestretched and prepressed members from reducing prestressed force in the structure.

Fig. 18, 19, 20 show the combined body of triangular wing , which adopts the rope as prestretched member and fuselage. If the connection of upper part for spar 12 is not allowed to pass through directly the fuselage clue to the structure , the rope 22 placed in groove provided on the upper part of the upper beam 40 for the fuselage, a end of the rope 22 passes then through the holes on the rafter 27 of the spar 12 and the lower beam 41, then turn at the wingtip to make the both ends of rope 22 butt as a closed ring, and to confirm the length of the rope 22 which is pulled in the groove of upper beam 40 and rafter 27 byuse of metal wire 44 or other mechanism from the both side of fuselage , and is prefastened and fixed dot-dash shown is in the state where rope is not prefastened. The rope 22 is the prestretched member for the longitudinal beam 42, the rope is placed into the groove or holes of the longitudinal beam 42 and to connect the fuselage sections in series together and then is prefastened, the filling 37 is filled into the groove of the upper beam 41, groove or holes of the rafter 27, lower beam 41 and longitudinal beam 42, the whole structure produces the prestress after solidification. The lower beam and the rafter can adopt integrate member to reduce connection members, torsional pull-rod 17 can be fixed between the spar diagonally to increase anti-torsion performance of the structure. Such structure is especially suitable for triangular wing and also suitable for aircraft with central wing, due to its longitudinal and radial prestretched members are crosswise disposed.

In Fig. 21, 22, fuselage bulkhead 1 are a circular ring, transverse the floor boared beam positioned on the circular ring and the bulkhead 1 combine into an integral. Annular lacing wire 43 is as prestretched member; matrix compound material is as prepressed member. Heat expansion coefficient of the prestretched member is bigger than that of the prepressed member, the prestretched member covers the prepressed member. The lacing wire is embedded in matrix compound material 34 and is divided into two layers and connected together by metal wire 44 to form bearing framework of the fuselage bulkhead. The framework is contained by the matrix compound material 34. When in making, the framework is placed into the preformed mould to heat, the prestretched member is expanding and elongated, then the matrix compound material is filled, to preserve temperature for period, and cool the material after its solidification, the component produces prestressed force after the prestretched member is shrinking. Short metal wires 70 can be mixed into the compound material to increase strength and rigidity of the components.

In Fig.23, wing 21 and central wing case 2 combine as an integrated structure. Rope is as prestretched member of the integrated structure, matrix compound material is as prepressed member, which form integrated structure and aerodynamic configuration. Heat expansion coefficient of the prestretched member is bigger than that of the prepressed member, the prestretched member covers the prepressed member. Extended end of the prestretched member connects other components. When in making, prestretched member rope 22 or reducing rope 48 and metal wire mesh 35 form a frame which is placed into preformed mould 45, other components required the whole structure such as fuel tank 46, engine suspension 11 and other beams, tubes and connection parts are disposed in position and relative holes and cavity are left accordina to the design requirement. the metal wire-mesh is placed into the cover skin, upper and lower metal wire-mesh 35 and rope 22 or reducing rope 48 are connected together by metal wire and the cable 22 and the metal wire-mesh 35 are prefastened at same time, then matrix compound material 34 is filled to solidify and form. Normal temperature or high temperature forming can be adopted. If using normal temperature forming, prefastening force is larger than the max, allowable stress of the component. If adopting high-temperature forming, the rope 22 and the metal wire-mesh 35 are properly prefastened, then matrix compound material is filled, 34 to heat the whole structure up to a proper temperature, prefasten the rope 22 or the reducing rope 48 and the metal wire-mesh 35 after their expansion and elongation, keep the temperature for a while, then cool the compound material 34 after its solidification. The rope 22 or the reducing rope 48 and the metal wire-mesh 35 are shrinking at same time, the matrix compound material 34 does not shrink or the shrinking is very small. The whole component produces prestressed force.

The prestretched member of the above-mentioned structure can adopt, pull-rod prestressing structure or mixed prestressing structure which consists of rope, wire mesh or as prestretched member, made of reinforced fiber compound material can be used or adopting metal/matrix compound material prestressing structure manufactures alone wing, central case, single tail, vertical tail, propeller, engine fan blade and other assemblies, which can also form into combined body.

In Fig. 24, metal floor board beam 7 made of metal materials is as prepressed member, there is a longitudinal hole in its lower part, rope 22 is as prestretched member placed in hole, the filling 37 is filled to prefasten rope 22, the component produces prestressed force after solidification of the filling. Normal temperature or high temperature forming can be used. If using high-temperature forming, heat-expansion coefficient of the prepressed member should not bigger than that of the prestretched member.

In Fig. 25, 26, support frame of undercarriage 9 can be made of Titanium alloy through process of sheet metal forming, channeled tube or circular tube welded on the upper edge form's into prepressed member, the rope 22 as prestretched member is passed into the channeled tube 47 or circular tube, the filling is 37 filled to heat the whole component, rope 22 is prefastened . The component produces prestressed force after solidification of the material. In the above-mentioned structure, heat expansion coefficient of the prestretched member rope 22 is bigger than that of the prepressed member support frame of undercarriage 9 the component produces a sufficient prestress after solidification and cooling. When heat expansion coefficient of the prestretched member and the prepressed member is the same or close to, prefastening force should be bigger than the max, allowable stress of the component. In order to prevent low-cycle fatigue of the lower part for undercarriage support frame, prestretched member structure can be provided on the relative place of the frame.

Fig. 27 is a schematic view of prestressed rafter structure, the prestretched member rafter 27 is profiled component whose section is from large end to small end. There are holes provided on the vertical direction of the rafter for threading prestretched member reducing rope 48 there in, the filling is filled in the holes to form prestressed rafter, the reducing rope 22 is twisted by metal wire with reducer structure which is transiting from large end to small end uniformly or not. When in producing, the reducing rope is tensioned to solidify the filling with normal temperature forming and high temperature forming. The component produces prestressed force after solidification of the filling. If using high temperature forming the heat-expansion coefficient of the rafter is lower than that of the reducing rope. The rafter provides with convex rim for connection with envelope and web.

Other structure form of the above-mentioned reducing rope is implemented by reducing quantity of the metal wire used for making the rope, that is to reduce respectively metal wire quantity in rope according to degrees of stress. The ropes can be made of fibre reinforced compound materials besides above-mentioned metal wires, thus the structure weight can be lowered.

In Fig. 28, 29, 30, the prestretched member integrated wallboard 19 or floor board is consisting of wire-mesh 35 and lacing wire 43, which are combined into an integral by means of metal wire. Prestretched member is covered by prepressed member matrix compound material. The matrix compound material covered prestretched member can be made into integrated wallboard or floorboard appearance by means of manual plastering or other methods, which is placed into a preformed mould to prefasten the prestretched member, then adopting normal-temperature and high-temperature forming to solidify the matrix compound material 34. After the matrix compound material solidified the component produces prestress.

Fig. 31 is a schematic view of bimetallic sleeve or pivot prestressed structure. The pivot 50 is formed by inner and outer sleeves 49 which are made of two different metal as well as the filling filled between inner and outer sleeves. The heat expansion coefficient of outer sleeve 49 is larger than that of inner sleeve 49. The inner sleeve is placed into the outer sleeve with clearance between the sleeve-walls, which is filled with fillings 37 then heated. After the filling is solidified and cooled, the component produces prestress.

Fig. 32 is a schematic view of single-layer metallic tube prestressed pivot structure. The pivot adopts metallic sleeve 49 as the prestretched member, and matrix compound material 34 is prepressed member, which is placed into the metallic sleeve 49. In manufacturing, the pivot shall be heated and the matrix compound material 34 shall be solidified and cooled, then the component produces prestress.

Fig. 33, 34 are schematic view of engine fan blade prestressed structure. The fan blade 54 adopts a metallic skeleton 51 with wave form section as the or prestretched or prepressed member, and matrix compound material 34 is as the prepressed or prestretched member. The matrix compound material 34 contains metallic skeleton 51 as an integral, there are the holes distributed on the skeleton. The compound material contains high tensile fibre 66 in horizontal and vertical distribution. The horizontal fibres 66 pass through the holes on the skeleton, the vertical fibres 66 disposed at both sides of the skeleton are combined into an integral to form the fibre reinforced compound material. In order to enhance ability to bear impact from outer object fan blade 51, a metallic cover surface 52 is provided on one side of the blade. The cover surface 52 may be directly made with skeleton 51 together or made alone connecting with the skeleton 51. The forming methods include high-temperature and normal-temperature forming. When high temperature forming is adopted, the whole component shall be placed into preformed mould for heating, thus skeleton 51 is expanded and extended, then keeping for a while for heat preservation. After matrix compound material 34 is solidified and cooled, the component produces prestress. Such blade adapts for the environment with low temperature. When normal temperature forming is adopted, the integrated component shall be placed into preformed mould, then to prefasten the high tensile fibre 66 of matrix compound material, then material is solidified under the normal temperature. While blade is used, the skeleton is expanded and extended after temperature rises up, thus the blade produces prestress. Within allowed temperature of the skeleton material , the higher the temperature is, the larger prestress is. The strength, rigidity and fatigue strength of component is greatly improved.

The above-mentioned fan blade structure can adopt high tensile fibre skeleton as the prestressing component, the matrix compound material used as prepressed member, which can be formed and solidified under high temperature. While forming, the fibres are prefastened and solidified, then the prestress is produced. It can be used under low temperature.

Fig, 35,36 are schematic view of the bimetallic prestress fan blade structure. The fan blade 54 is consisting of blade sandwich core 53 and blade outer layer 55, which are made of metal material. The blade outer layer covers the blade sandwich core , the outer layer and sandwich core may be used as prestretched meber or prepressed member. While heat expansion coefficient of sandwich core 53 is larger than that of outer layers 55, the sandwich core 53 is as prepressed member, but outer layer 55 is as prestretched member. The temperature rising during utilization makes the sandwich core expand, then the prestress is produced, and thus it can be used under high temperature. On the contrary, while heat expansion coefficient of the sandwich core 53 is less than that of outer layer, the core 53 is as prestretched, but outer layer 55 is as prepressed member. By means of heat treatment, the component produces prestress. It can be used under low temperature.

Fig. 37 is a schematic view of bimetallic tubes structure. The metallic tubes consists of outer layer 55 and inner layer 56. Each layer is made of metal material with different heat expansion coefficient. The outer layer 55 contains the inner layer 56 into an integral, without obvious joint surface. Both can be used as prepressed member or prestretched member. The material can be processed into actuating cylinder, under carriage outer cylinder and gun barrel, which are with suitable shape and appearance. The residual prestress can be produced after heat treatment.

Fig. 38 is a schematic view of bimetallic bar material structure. The bar material consists of outer layer 55 and inner layer 56. Each layer is made of metallic material with different heat expansion coefficient. The outer layer contains the inner layer and combine into an integral without obvious joint surface. The inner layer 56 and the outer layer 55 can be used as prestretched member or prepressed member. This material can be processed into axle, piston, pull-rod, spring and etc, which are with suitable shape and appearance, thus the residual prestress is produced by means of heat treatment.

Fig. 39 is a schematic view of bimetallic flat profile structure. The structure consists of inner layer 56 and outer layer 55 made of the metals with different heat expansion coefficient.The outer layer contains the inner layer into an integral without obvious joint surface. The inner 56 and the outer layer 55 can be used as prestretched member or prepressed member. This material can be processed into plate spring, propeller, fan blade and etc, which are with suitable shape and appearance. The residual prestress is produced by means of heat treatment.

In Fig. 40, 41, fuselage 1, central wing case 2, sweeping mechanism 58, outer wing 59 are all in prestressed structure. The lug 63 on outer wing 59 root shall be connected on the central wing case 2. The sweeping mechanism is provided in inner wing 57. Other loading components adopt mostly the prestressed component. The outer wing and sweeping mechanism is distributed at the left and right in symmetry.

In Fig. 41, the outer wing 59 is integrated prestress structure, the lug 63 has a large circular hole, which can be cooperated with the hole on lug 63 of the central wing case. Both holes can be linked with rotating ring 64, fixed by several bolts 39. The rotating axle can replaced byrotating ring, thus the rigidity and stabilisation of the structure can be enhanced to prevent the rotating axle from breaking and to lower the structure weight. The central wing case 2 may also adopt prestressed structure. The outer wing 59 adopts rope compound material prestress integrated structure. The rope can be divided into 2 groups (upper and lower). The lower group can be provided with reinforced rope 22. The front and back beam of each group shall share a common rope, with both ends in span extended into the whole inside wing, but a section at the middle shall be preserved outside the wing root. At the four corners of both sides of central wing case, the pulley blocks 62 are provided for the upper and the lower groups and arranged from front to rear, when assembling, the rope threads into the groove of the pulley. After the rotating ring 64 is provided, the compress unit 60 at disposed the central wing case can press jockey pulley 61 tightly, thus rope 22 produces a prestress which is larger than max. stress, so that the outer wing is tightly compressed against the central wing case. The acutuating cylinder 67 is provided between the root of outer wing 59 and the central wing case. While outer wing 59 turns around the rotating ring 64 under hydraulic-drive of actuating cylinder to sweep in front and rear, tightnes of the rope 22 is unchanged or in little change. Thanks to the compress unit 60 with fasten-proof function, the rope 22 can always keep stable prefastening force to bear loading moment of outer wing 59 and dispel the vibrat on of outer wing. At this time, the lug 63 is no longer bearing the alternating load. The jockey pulley 61 can make the rope 22 produce pretfasten force and the compress unit 60 may adopt bolt plus high-tensile spring or hydraulic mode to prefasten, thus prefasten force of rope 22 is always larger than max.Allowable stress of outer wing 59, which plays the buffering role. The whole sweeping mechanism is provided inside inner-wing 57, the actuating cylinder 67 is linked to the support 65 of the wing root. Furthermore, the sweeping angle change of outer wing 59 can lower the loading ability of rope, but the outer wing 59 can sweep with 60°. The angle change of front rope for outer wing and the front pulley shall be less than 20°.The tension of outer wing can be distributed evenly on the four corners of the wing root. Along with the change of sweptback of outer wing the aerodynamic drag is also reduced, thus the aerodynamic loading acting on the outer wing is reduced simultaneously, which is just suitable for the max. allowable stress.

In Fig. 42 , the other method of the variable sweptback wing sweeping mechanism is in that the rope 22 of left and right outer wing 59 shall adopt diagonal intersect linking method. The rope 22, disposed in the outer wing 59, shall leave a section at outside of wing root. The front rope 22 of left outer wing 59 shall thread into pulley 62 disposed on central wing case 2, then is linking with back angle rope 22 of right outer wing 59 . The front rope 22 of the right outer wing 59 shall link with the back rope of the left outer wing, which intersects on central wing case 2, to link outer wing 59 distributed with left and right symmetry, then is compressed by jockey pulley 61 to produce prestress. While outer wing sweeps around the rotaing ring 64, the rope 22 keeps always prefasten force, thus outer wing 59 is pressed against the central wing case 2 to prevent the vibration of outer wing. Because the loading borne by lower part of the outer wing is heavier than the upper part, the strength of the rope in lower part may be enhanced or the reinforced rope can be provided additionally.

In Fig. 43, 44, 45, the integrated central wing case 2 may be made into a frame 69 with its shape like central wing case appearance by utilizing the thin-wall metal tube in abnormal section. The prestretched member rope 22 shall thread into the metal tube of frame 69, which are connected crosswise with each other. Two groups of busning 68 are provided at the four corners of frame 69 used for supporting pulleys. The two groups of upper and lower bushing 68 are concentric in their axis there is a groove provided on the outer perimeter of bushina 68. The horizontal prestretched member rope is contained in the groove of the bushing. The respective bushing of each group is pulled to the centre from both sides, thus frame 69 and bushing 68 are fixed in the preformed mould. Other related components shall be well provided, the frame in front and back is being well provided with prestretched member rope 22. The matrix compound material 34 of the prestreched member shall be filled hollow cavity of into frame 69 for heating, and then the rope 22 shall be prefastened. After the matrix compound material is solidified and cooled, the rope 22 and the frame 69 are shrank, thus the component produces prestress. In the structure, the thin-wall tube of frame 69 only plays the roles containing the matrix compound material 34, then the component produces the pretension, thus the rigidity structure is enhanced. In order to ensure the bushing 68 for precision of fit with related components, the bushing 68 remains margin for machining. After the central wing case is formed, the fine machining shall be done. The front and back sides of frame is provided with the holes and holes with screw-thread for linking with the fuselage bulkhead. The longituginal sleeve 29 is provided between the front and the back frame, the fuse lage longituginal prestretched member threads through therein while connecting, then the central wing case and fuselage are linked into an integral. Four pull-rods 38 distributed in the form of quadrilateral are provided on middle transversely which can link with lug 63 at both sides. If necessary, the matrix compound material 34 may be mixed with short metal wires 70.

The other manufacturing method of above-mentioned integrated central wing case is in that, the prestretched member and other components can be formed into a skeleton, with the holes and bolts preserved to link with other components, which is then placed into performed mould for heating and filled with matrix compound material 34 to prefasten the prestretched membe. After the matrix compound material 34 is solidified and cooled the prestretched member in shrank, thus the component produces the prestress. If necessary, the matrix compound material 34 may be mixed with short metal wires 70. prestretched member with such structure may adopt rope 22, and also may adopt high tensile fibre as the prestretched member structure. No matter what structure is adopted, the heat expansion coefficient of the prepressed member shall be not larger than that of the prestretched member.

In Fig. 46,47, at the root of outer wing 59 there is a wing butt connection board 36, the lug 63 is linked to the wing butt connection board. The prestressed member rope 22 is provided at the four corners of section located on outer wing 59 in the direction of span. There is a metal wire-mesh 35 provided in the envelope of the outer wing. In order to strengthen the strength of wing root, the reinforced pull-rod 38 is provided, with one end linked to wing butt connection board 36 and other end placed into the matrix compound material 34. Each rope 22 shall be linked with metal-mesh 35. The metal wire of metal wire-mesh is reduceina structure direction of span, with the big end threading into the holes of wing butt connection board 36 for linking, then making the metal wires into a metal wire-mesh with the horizontal metal wires. The two ends of rope 22 is in outside of the wing butt connection board 36, a closed section shall be preserved for connecting with the central wing case. The manufacturing method is that: the skeleton consisting of structure above mentioned shall be placed into the prepressed mould, then a pretension mechanism is provided, and the fuel tank and etc are provided in the skeleton, then the dry fibre or fibre cloth is laid and the prepressed member matrix compound material 34 is filled or make the compound material 34 and the skeleton into a blank, then which is placed into the preformed mould. After the whole component is heated, the prestretched member and the wire-metal are prefastened. While the matrix compound material is solidified and cooled, the prestretched memer is shrank, but the compound material shrinks a little, thus the whole component produces prestress. If necessary, the matrix compound material is mixed with short metal wire 70 for increasing strength and rigidity.

The outer diameter of prestretched member or the holes prepressed member is as deformed structure denoted in above-mentioned the prestressed structure may be the waveform, ribbed spiral and arched shape or other any deformed structure. The purpose is to enhance binding force of fillings or matrix compound material with prestretched and prepressed member, thus the prestress can uniformly distributed at each point of the structure to prevent the wearing caused micro-move between the prestretched member and the prepressed member from decreasing and destroying prestress of the structure.

The prestressed structure above mentioned shall adopt normal temperature forming or high temperature solidification. The normal temperature means ambient temperature. The high temperature forming shall be satisfied with following requirement: the temperature shall be lower than tempering temperature of prestretched member but higher than Max. utilizing temperature, or adopts for the forming and solidification temperature of the fillings and matrix compound material. The prestressed structure made of different materials has different forming and solidification temperature.

The fillings and matrix compound materials above-mentioned are characterized in that which must be with sufficient strength, rigidity, toughness and binding force with other materials. After forming and solidification, they do not shrink or shrink a little, without corrosiveness and with long term stabilisation. Up to now, the resin compound material can achieve the requirements.

This invention is not only suitable for airplane, but also for other aircraft.

## Claims

1. A prestressed structure for aircraft, characterized in that ,the aircraft's beams, frame, fuselage structure, central wing case, horizontal tail, vertical tail, longitudinal stringer, radial stringer, rafter, integrated wallboard, floorboard, engine fan blade, actuator cylinder, shafts, axles, stabiliser, rudder, fin, flap, variable sweep wing linking mechanism and other loading components, which shall be all or in part in use of prestressed structure, the prestressed structure consists of prestressed and prestreched components or fillings, with which the aircraft loading components above-mentioned are formed, during manufacturing, assembling and utilizing loading components, a prestress is produced, which is larger than max. allowable stress but smaller than yield strength, the prestressed components are then formed, its prestretched members are embedded in the prepressed members or contained with the prepressed members, the prestretched members, such as prestretched ring,pull-rod, riveted pull-rod, rope, tubes, cloth, mesh, band, lacing wires, wire, rash, skeleton and etc., are made of high-tensile steel, titanium alloy, aluminium alloy and other alloys, metal materials and fibre reinforced compound materials or a metal material of bimetals, its shapes depend upon the structural form and bearing force requirement for aircraft loading component, the prepressed members having above-mentioned loading component structure and aerodynamic configuration, are made of metal materials or matrix compound materials, the prestretched members are prefastened to produce prestress, with the extending end linked with other components.

2. The prestressed structure for aircraft according to claim 1, characterized in that the prestressed structure is the prestretched ring prestressed structure, i.e. a step is provided on the outside of ring-shaped fuselage partitioned frame, the bulkhead is a prepressed member. its step contains a metal ring-shaped prestretched ring without joint used as a prestretched member having a stationary fit therewith to produce prestressing force.

3. The Prestressed structure for aircraft according to claim 1, characterized in that said prestressed structure is riveted pull-rod prestressed structure which uses ultra long rivet-shaped riveted pull-rod made of metal materials as the prestretched member,the sleeve and frame made of metal materials are as the prepressed members, the heated riveted pull-rod is embedded in the prepressed members, with both ends extended from prepressed member and riveted into an integrated loading component, after riveted pull-rod is cooled, the component produces a prestress.

4. The prestressed structure for aircraft according to claim 1, characterized in that said prestressed structure is pull-rod-shaped prestressed structure which uses ultra long single-head or double-head bolt-shaped pull-rod made of metat materials as the prestertched members, with the shapes such as straight, or reducing structure or straight, circle and half-ring with ribs at the middle, the prepressed members are various beams, frame, longiudinal stringer, rafter, integrated wing, horizontal tail, vertical tail, central wing case made of metal or non-metal matrix compound materials, which form the fuselage structure and aerodynamic configuration components, prestretched members are embedded in the prepressed members or contained in prepressed members, its screw-thread end or extended prepressed member is linked with other components, then is becoming an integral after the fillings filled between the prestretched member and the prepressed member are solidified, or is directly making into the integrated components using solidification of the prepressed member contained with prestretched member made of matrix compound materials, the prestreched members are prefastened during forming or assembling period, after the fillings and matrix compound material are solidified, the components can produce the prestressed force.

5. The prestressed structure for aircraft according to claim 1, characterized in that said prestressed structure is the rope prestressed structure, which includes the rope or variable-diameter rope made of metal or fibre reinforced compound materials as the prestretched member, and fuselage structure and aerodynamic configuration components consist of beam, frame, longitudinal stringer, rafter, central wing case, wing, horizontal and vertical tail, wing cintegrated body as the prepressed members, which are made of metal and fibre reinforced compound material, the prestretched member is embedded in the prepressed members to form an integral. or to combine into an integral by adding fillings between both members, during manufacturing period, the prestretched member is prefastened; the prestressed force is then produced after the component's fillings and matrix compound materials are solidified.

6. The prestressed structure for aircraft according to claim 1, characterized in that said prestressed structure is metal compound material prestressed structure which includes , rope, pull-rod, tubes, wire, cloth, mesh and rash made of metal materials as the prestretched members , and the metal skeleton or fuselage structure and aerodynamic configuration components consist of beams, frame, integrated wing, central wing case, wing integrated body, horizontal tail, vertical tail, integrated wallboard, floorboard, axle and fan as the prepressed members, which are made of matrix compound materials,the prestretched members are contained by prepressed members or contained with prepressed members, during manufacturing or assembling period, the prestressing component is prefastened; the prestressing force of the component is then produced after the matrix compound material is solidified.

7. The prestressed structure for aircraft according to claim 1, characterized in that said prestressed structure is thermal expansion prestressed structure which is used for engine fan blade, the fan blade core or skeleton made of metal materials is used as prepressed member, the section of the sandwiched core or skeleton is in waveform structure, the outside layer of fan blade made of metal material or fibre reinforced composite material is used as prestretched member, which contained with prepressed member is combined into fan blade, the thermal expansion coefficient of the sandwiched core or skeleton material is larger than that of outside layer material, the outside layer covering sandwiched core or skeleton, combines the both parts into an integral, during its utilizing period, the raised temperature makes the sandwiched core or skeleton expanded and then the fan blade produces the prestress.

8. The prestressed structure for aircraft according to claim 1, characterized in that said prestressed structure is fibre reinforced compound prestressed structure, the rope, wire, mesh, cloth, tape made of fibre reinforced materials are used as prestrestched member, the beams, frame, centre wing case, wing, horizontal tail, vertical tail, outer covering , floor, rudder, flap, stabiliser, nose, tail cone and propeller made of matrix compound material are used as prepressed members, the prestretched members are covered by prepressed member and combined into an integral, when manufacturing period, the prestretched member is prefastened, after matrix compound material is solidified, the components produce prestressing force.

9. The prestressed structure for aircraft according to claim 1, characterized in that said prestressed structure is bimetallic structure which includes the tubes, bars and wires made of bimetallic material whose inner and outer layers are of different thermal expansion coefficient; the actuating cylinder, landing gear sleeve, the gun barrel axes, piston, propeller, fan blade and springs, which are made of flat materials, the outer metal in the form of a circle covers the inner layer, there is no clear interface between the outer and inner layers, both outer and inner layers can be used as prestretched member or prepressed member, the components produce residual prestressing force by heat-treatment.

10. The prestressed structure for aircraft according to claim 1, characterized in that said prestressed structure is used in the sweep linking mechanism of the variable-sweep wing, except for adopting lug connection, a set of flexible junction for prestressed rope structure is supplemented, by utilizing the rope ends placed in the outer wing's four wing roots, place them into the outer wings, there is a closed section remained at the wing root, the closed section passes into pulley block positioned on the central wing case and is prefastened, and a prestressing force is then produced, the outer wing is closely against the central wing case, the outer wing is swept forward and backward around a rotating ring by the actuating cylinder, when in sweeping, the outer wing is always closely against the central wing case, if necessary, the reinforced ropes are set up below the outer wing.

11. The prestressed structure for aircraft according to claim 10, characterized in that the way of rope diagonal connection is adopted to symmetrically connect the outer wings at the both sides through the central wing case into an integral, that is, each rope placed in the outer wings is preserved with a length outside the wing roots, the front rope in the left outer wing passes into the pulley placed in the central wing case and connects with the back rope in the right outer wing, the front rope in the right outer wing is connected with the back rope in the left outer wing, the ropes intersect in the central wing case and connect the outer wings of bilateral distributed, then utilizing the tension pulley placed in the central wing case for tightly compressing, then the prestress is produced, when the outer wings sweep around the rotating ring , the ropes always keep producing prestress, which makes the outer wings closely against the central wing case and prevent the outer wings from vibrating, because the loading borne by the lower part of outer wing is heavier than the upper part, the rope strength at the lower part can be enhanced or reinforced ropes are supplemented.

12. The prestressed structure for aircraft according to claim 3, characterized in that the central wing case is a quadrilateral frame, in which the sleeves divided into four layers up, down, front and back, are provided in the frame, and with the frame connected into an integral as a prestretched member, the riveted pull-rods are provided in the horizontal sleeve as prestretched member, after being heated, the pull-rods are riveted, and the frames at the both sides are connected, when the riveted pull-rods are cooled, the components produce permanent prestress; ropes or pull-rods are placed in the vertical sleeve as prestretched members, which link in series with each section of the fuselage, after being assembled, the prefastened ropes or pull rods produce permanent prestress, the frame can be made into a bevelled frame, whose front side is wide and backside is narrow, whose bevel angle adapts the back sweeping angle, around the frame, screw holes and holes are prepared for connecting with other components.

13. The prestressed structure for aircraft according to claim 4, characterized in that the fuselage bulkhead adopts pull-rod prestressed structure; the fuselage bulkhead is a closed ring-shaped body as the prepressed member, there is a groove in its perimeter and an opening in the lower part, the prestretched member is a double-head bolt ring-shaped pull-rod with left-right-turning screw thread, which is placed in the groove of fuselage bulkhead, the component produces prestressing force by fastening ring-shaped pull-rod using two-turning nut.

14. The prestressed structure for aircraft according to claim 4, characterized in that the fuselage's partition frame adopts pull-rod prestressed structure,the fuselage frame is an arched frame as the prepressed member, there is a groove in its perimeter, the prestretched member is a double-head bolt semi-ring pull-rod placed in the groove, the two end's screw threads stretch out to connect with other components and make them produce prestress when in connecting.

15. The prestressed structure for aircraft according to claim 4,characterized in that the aircraft's wing adopts pull-rod prestressed structure, bearing frame of the wing consists of variable-diameter pull-rod, reinforced wing girder, engine suspension, undercarriage support beam and prestretched component formed by wire mesh, which is placed in the prepressed member of matrix compound material and is contained, the variable-diameter pull-rod and thread section of the reinforced sparare extended from the connecting plate of wing root and are connected with the central wing case , the vertical wire of wire mesh is a reducing structure, its big-end is connected with connecting plate of wing root , the heat expend coefficient of prestretched members are bigger than that of prepressed members, when forming the components, the prestretched members are prefastened, after solidification and cooling of the matrix compound material, the prestretched members shrink and the components produce permanent prestressing force.

16. The prestressed structure for aircraft according to claim 4, characterized in that the sparof the aircraft adopts pull-rod prestressed structure,the rafter of prepressed member is a reducing structure with vertical holes or distorting holes thereon, the variable-diameter pull-rod is as prestretched memeber which is passing into the holes of the prepressed memeber, upper and lower rafter are connected into sparby the web,filling fills the space between the variable-diameter pull-rod and hole-wall of rafter and combines them as an integral, the thread section of the variable-diameter pull -rod extends from the rafter and connects with central wing case,the heat expansion coefficient of prestretched members are bigger than that of prepressed members, the variable-diameter pull-rod is prefastened when in manufacturing, after the filling is solidified by high-temperature forming, the components produce then permanent prestressing force.

17. The prestressed structure for aircraft according to claim 4, characterized in that the longitudinal connection of aircraft's fuselage adopts pull-rod prestressed structure which adopts straight pull-rod as prestretched members and are placed into the holes on the fuselage bulkhead, longitudinal stringer, longitudinal floor beam and central wing case and are respectively passing through each section of the fuselage, which are connected to the upper or lower neighboring double fuselage partition frame , each pull-rod passes through three or more than three fuselage bulkheads ,quantity of the pull-rod passing through the middle section of the fuselage is larger than that passing through the two ends of the fuselage, the pull-rods are prefastened, the fuselage produces then a longitudinal prestressing force, filling can be filled into the space between the pull-rod and the hole-wall, when necessary.

18. The prestressed structure for aircraft according to claim 5, characterized in that the longitudinal connection of aircraft's fuselage adopts rope prestressed structure which adopts several integrated ropes as prestretched members and are placed into the holes on the longitudinal stringer, longitudinal floor beam, central wing case and other bulkhead of the prepressed members for fuselage, the sections of fuselage are in series connected and are prefastened, filling is filled between the prestretched members and the prepressed members,after with is solidified,the components become into an integral which keeps a permanent prestressing force, both ends of the ropes are fixed at the tail cone and the nose, reinforced ropes can be provided in heavy stress areas when necessary.

19. The pestressed structure for aircraft according to claim 5, characterized in that, the combined body of wing and fuselage for aircraft adopts prestressed structure ,sparformed by upper and lower rafter as well as radial-plate, upper beam, lower beam and longitudinal beam of the fuselage are as prepressed members, part of upper and lower beam and rafter can adopt integrated components, various beams and rafters are hollow structure with holes or structure with grooves, and form in common a frame girder of integrated structure, the ropes of prepressed member pass into the holes and the grooves of the girder and a certain length is left in advance, the ropes are pulled in the grooves and fixed at the joining points of the upper beam and the upper rafter by using wires or other mechanism, the components produce the prestressing force, the fillings are filled between the rope and the holes or the grooves, and are then solidified, anti-twist pull-rod can be additionally provided between the wing beams diagonally.

20. The prestressed structure for aircraft according to claim 6, characterized in that the fuselage bulkhead adopts metal/compound material prestressed structure, the ring-shaped fuselage partition frame made of matrix compound material and horizontal floor beam are connected into an integral as prepressed member, lacing wires made of metal material divided into inner and outer layers, and are connected together by metal wires as prestretched members which distribute in the bulkhead circularly, and connect with the lacing wires in the horizontal floor beam to form a framework, which is contained by prepressed member and constitutes integrated fuselage bulkhead, heat expansion coefficient of prestretched members is bigger than that of prepressed members, high-temperature forming is adopted, after forming, solidifying and cooling of the components, the prestretched members are shrank and the components produce permanent prestressing force.

21. The prestressed structure for aircraft according to claim 5, characterized in that, the horizontal floor beam of the aircraft adopts rope prestressed structure, the horizontal floor beam is as prepressed member, there is a longitudinal hole thereunder, rope of prepressed member is placed therein and is prefastened, filling is filled into the space between the hole-wall and rope to contain prestretched members after solidification, both sides are combined into an integral, after filling is solidified, the components produce a permanent prestressing force.

22. The prestressed structure for aircraft according to claim 5,characterized in that the landing-gear bearing beam adopts rope prestressed structure, several circular tubes or channeled tubes provided in the upper part of landing-gear bearing beam are as prepressed members, single rope is provided for each circular tube or channeled tube, and is prefastened as prestretched member, filling is filled into the space between the hole-wall and rope, and contains rope of prestretched member to form into an integral, under landing-gear bearing beam the circular tube or channeled tube can be also provided as prepressed member, single rope is provided for each circular tube or channeled tube, and is as prestretched member, and both upper and lower sides are prefastened at same time, which form an integrated component, after the filling is filled and is solidified, the components produce a permanent prestressing force.

23. The prestressed structure for aircraft according to claims 5, characterized in that said variable-diameter ropes adopt the prestressed structure, the variable-diameter ropes are twisted by rope wire with same or different quantity, which is made of metal wire, or fiber reinforced compound materials, the rope wire is a reducing structure when the quantity of rope wire is same, and which is transited from larger end to smaller end,the quantity of rope wiret will be reduced gradually from larger end of the rope when the quantity is different.

24. The prestressed structure for aircraft according to claim 6 characterized in that said integrated wallboard or floor adopts metal compound material prestressed structure, framework consists of wire-mesh, lacing wire and metal wire, which is as prestretched member, the matrix compound materials are as prepressed members and are contained with prestretched member to form an integrated structure of integrated wallboard or floor, the framework of prestretched member is prefastened when in forming, the components produce prestressing force after solidification of matrix compound materials.

25. The prestressed structure for aircraft according to claim 6,characterized in that said pivots adopt metal/compound materials prestressed structure, the inner and outer sleeves made of two metal materials with different thermal expansion coefficient, which are as prestretched members, the thermal expansion coefficient of outer sleeve is more than that of inner sleeve, filling is filled into the space between inner and outer sleeve, which is as prepressed member, the inner and outer sleeves are combined into an integral , after heating and solidifying filling, the prestretched member will be shrank after cooling, and the components produce a permanent prestressing force.

26. The prestressed structure for aircraft according to claim 1, characterized in that said fan blade of engine adopts the bimetal prestressed structure, the outer layer of fan blade and sandwich core are made of two metal materials with different thermal expansion coefficient, the outer layer of fan blade is as prepressed members, and the sandwich core is as prestretched member,the thermal expansion coefficient of sandwich core is less than that of outer layer for fan blade, the prepressed members contain the prestretched members to combine into an integral, the component will produce permanent prestressing force by means of heat treatment.

27. The prestressed structure for aircraft according to claim 5, characterized in that the integrated central wing case shall adopts rope and pull-rod prestressed structure, frame of integrated central wring cass is made of thin-wall profile metal material, two sets of bushing are provided in four comers on its each side, both upper and lower sets of bushing are in the same axis, and are symmetrically jointed with rope through the hollow of frame, four straight pull-rods are provided in the central part of frame horizontally, and used to link lug, several sleeves are provided in frame longitudinally, matrix compound material mixed with short metal wire is filled in the hollow of frame to contain rope, pull-rod and bushing, and is combined with frame into an integral, the rope are prefastened when in forming at high temperature, after solidifying matrix compound materials, the components produce permanent prestressing force,the matrix compound materials and bushing are as prepressed members , the others are as prestretched members.

28. The prestressed structure for aircraft according to claim 5, characterized in that said outer wing adopts rope prestressed structure, matrix compound materials are used as prepressed members to manufacture into the structure and aerodynamic configuration of outer wing , ropes and wire-mesh are as prestretched members to place into the four corners in the divection of span and envelope of outer wing cross section, wire-mesh and rope are joined to an integral with metal wire, the metal wire of wire-mesh is reducing structure in the direction of span, its root part of the larger end is jointed to the connecting plate of wing root, and the rope passes through the connecting plate of wing root, the tail part of its both ends are located at wing tips, a closed section is left in the wing root, lug and abutment are provided on the connecting plate of wing root, if necessary, short metal wire can be mixed in the matrix compound materials, the prestretched members are prefastened when forming the components after solidifying the matrix compound materials, the components produce a permanent prestressing force.

29. A manufacturing method of prestressed structure for aircraft, characterized in that the load-bearing structure consists of prestretched members and prepressed members or adding filling, when in mamufacturing, assembling and utilizing the prestretched members are placed into the prepressed member or contain the prepressed members, the prestretched members are prefastened by the preset prestretching mechnism, and the filling is filled the space between them, or first filling is filled and the prestretched members are then fastened, or the prestretched members are placed during filled filling period, the filling or the matrix compound material of prepressed member is solidified by using normal temperature or high-temperature forming, the components produce the prestressign force, the whole component is solidified at normal temperature when using normal temperature forming, the prestretched members are always prefastened during solidifying period, the heat expansion coefficient of its prestretched members should be bigger than that of the prepressed members when using high-temperature forming, when in producing, the whole component is heated,and keeps the temperature for a period and retains the prefastening force, the compound material is cooled after its solidification, the components produce permanent prestressing force by shrinking the prestretched member, when in producing, assembling and using the component produce a prestressing force which is bigger than its maximum allowable stress,but smaller than its yield strength to decompose complicated and disordered cyclic loading into orderly tension and pressure which are borne by different components, wherein the prestretched members bear the prepressing force and outside tension, the prepressed members bear prestension and outside pressure, the both members are combined into an integral by filling which makes the structure keeping pre-fastening force.

30. The manufacturing method of prestressed structure for aircraft according to claim 29, characterized in that when the prestretched member is made of metal material or reinforced fabric compound material, the prepressed member is made of matrix compound material, its producing method is that according to the component's shape and the bearing requirement, the prestretched members are made into bearing framework with other associated members and connecting members are placed into a preformed mould, to prefasten the prestretched members by preset prefastening mechanism, and the matrix compound material is filled into the mould to solidify the compound material by using normal temperature or high-temperature forming, the prestretched members keep always prefastening force, the components produce a permanent prestressing force after solidifyint the material, short metal wire can be mixed in the matrix compound material, if necessary.

31. The manufacturing method of prestressed structure for aircraft according to claim 29, characterized in that when the prestretched member is made of metal material or reinforced fabric compound material, the prepressed member is made of matrix compound material, its producing method is that according to the component's shape and the bearing requirment, the prestretched member is made into bearing framework and according to the component's shape the blank made of matrix compound material containing the prestretched member and other associated members as well as connecting members as prepressed members is placed into a preformed mould, the prestretched member is prefastened by the preset prefastening mechanism, the matrix compound material is solidified by using normal temperature or high-temperature forming, the prestretched members keep alway the prefastening force during solidifying period, the components produce a permanent prestressing force after solidifying the material, short metal wire can be mixed in the matrix compound material if necessary.

32. The manufacturing method of prestressed structure for aircraft, characterized in that the fan , blade of aircraft engine is as prepressed member or prestretched member by a metal framework with waveshape section, the matrix compound material is as prestretched member or prepressed member, its manufacturing method is that the reinforced fiber passes through the holes of the framewark and connects to the longitudinal reinforced fiber, the matrix compound material containing metal framework is as all integrated component which is placed into the preformed mould, the matrix compound material is solidified by using normal temperature or high -temperature forming.

33. The manufacturing method of prestressed structure for aircraft according to claim 29, characterized in that when the fan blade of aircraft engine consists of blade sandwich core and blade outer layers that are made of metal material,the blade outer layers cover the blade sandwich core, the thermal expansion coefficient for the materials which are made of blade outer layer and blade sandwich core ,is different, if thermal expansion coefficient of blade sandwich core is larger than that of the outer layer, the sandwich core is as prepressed member, and outer layer is as prestretched member,the sandwich core is expanded by raising temperature to produce prestress, if thermal expansion coefficient of blade sandwich core is smaller than that of the outer layer, the sandwich core is as prestretched member, and outer layer is as prepressed member, the components produce prestressing force by heat treatment.

34. The manufacturing method of prestressed structure for aircraft according to claim 29, characterized in that bimetal prestressed structure consists of profile, which is made of metal material with different thermal expansion coefficient in inner and outer layer, its outer layer covers the inner layer,f orm of structure includes tubers, bars, flat profiles, moreover the actuating cylinder,outer cylinder of undercarriage, gun barrel, axle, piston. pull-rod, propeller, plate spring and etc for aircraft are made of respective profiles which are selected from the shape of the components, and the relevant thickness of inner and outer layer are maintained, the components produce the residual prestress through heat treatment.
